# EUROPEAN PATENT SPECIFICATION

(11) **EP 4 625 234 B1**
(45) Date of publication and mention of the grant of the patent: **09.12.2026**
(21) Application number: 24174504.1
(22) Date of filing: 07.05.2024
(51) Int. Cl.: G06F 21/72, H04L 9/00

(54) **CRYPTOGRAPHIC HARDWARE ACCELERATOR WITH DYNAMIC RECONFIGURABLE REDUNDANCY**
KRYPTOGRAPHISCHER HARDWARE-BESCHLEUNIGER MIT DYNAMISCHER REKONFIGURIERBARER REDUNDANZ
ACCÉLÉRATEUR MATÉRIEL CRYPTOGRAPHIQUE À REDONDANCE DYNAMIQUE RECONFIGURABLE

(30) Priority: 25.03.2024 EP 24165926
(43) Date of publication of application: 01.10.2025
(73) Proprietor: IHP GmbH - Innovations for High Performance Microelectronics / Leibniz-Institut für innovative Mikroelektronik, 15236 Frankfurt (Oder) (DE)
(72) Inventor: Dyka, Zoya, 15236 Frankfurt (Oder) (DE); Kabin, Ievgen, 15236 Frankfurt (Oder) (DE); Sigourou, Alkistis Aikaterini, 15236 Frankfurt (Oder) (DE); Langendörfer, Peter, 15236 Frankfurt (Oder) (DE)
(74) Representative: Eisenführ Speiser

(56) References cited:
- SAEIDEH SHEIKHPUR ET AL: "Strengthened 32-bit AES implementation: Architectural error correction configuration with a new voting scheme", IET COMPUTERS AND DIGITAL TECHNIQUES, THE INSTITUTION OF ENGINEERING AND TECHNOLOGY, MICHAEL FARADAY HOUSE, SIX HILLS WAY, STEVENAGE, HERTS. SG1 2AY, UK, vol. 15, no. 6, 17 May 2021 (2021-05-17), pages 395 - 408, XP006112746, ISSN: 1751-8601, DOI: 10.1049/CDT2.12031
- CHEN JUNCHAO ET AL: "Adaptive Lock-Step System for Resilient Multiprocessing Architectures", 2023 IEEE NORDIC CIRCUITS AND SYSTEMS CONFERENCE (NORCAS), IEEE, 31 October 2023 (2023-10-31), pages 1 - 6, XP034464985, DOI: 10.1109/NORCAS58970.2023.10305460
- TAKASHI IMAGAWA ET AL: "High-speed DFG-level SEU vulnerability analysis for applying selective TMR to resource-constrained CGRA", QUALITY ELECTRONIC DESIGN (ISQED), 2013 14TH INTERNATIONAL SYMPOSIUM ON, IEEE, 4 March 2013 (2013-03-04), pages 538 - 545, XP032418466, ISBN: 978-1-4673-4951-2, DOI: 10.1109/ISQED.2013.6523663

## Description

### FIELD OF THE INVENTION

The present invention relates to a cryptographic hardware accelerator for performing a computational operation in a cryptographic application. The invention is further related to a method for operating a cryptographic hardware accelerator and to a computer program.

### BACKGROUND OF THE INVENTION

Cryptographic protocols using Elliptic Curves (ECs) over finite fields are approaches well known for the generation and verification of digital signatures as well as for mutual authentication, and shared secret key exchange. In comparison with the equally known RSA (Rivest-Shamir-Adleman) method, an elliptic curve cryptosystem (ECC) results in memory and band-width savings; the time and energy required for sending and receiving the messages is in fact effectively reduced. These features make ECC very attractive for resource-constrained devices that require not only a high level of security but also low-power, real-time communication and data processing. Nowadays, ECCs are widely used as a means for implementing security requirements in many application areas, especially for the Inter-net of Things (IoT), autonomous driving, e-health, Industry 4.0, wireless network sensors.

ECC is a variant of public key cryptography. Each communication partner has a public key and a private key which are an assigned pair. The private key is a (long) binary number. The public key is a point of an elliptic curve over a finite field. The basis operation in EC cryptographic protocols is a multiplication of an EC point P with a scalar k, denoted as an EC point multiplication (kP operation). The kP operation is defined mathematically as a k-times addition of a point P on an elliptic curve to itself. It can thus be calculated as a sequence of EC point additions and doublings. The kP operation is an expensive operation in terms of required time and energy. The acceleration of this task by dedicated cryptographic hardware, herein referred to as EC kP hardware accelerator, speeds up the execution time and provides energy savings.

The security of an EC cryptosystem is based on the confidentiality of private keys. The goal of attackers is to extract the private key of a targeted device. In some EC protocols, such as for authentication based on Elliptic Curve Diffie-Hellman (ECDH) procedures, the scalar k used in the kP calculation is the private key. In other protocols, such as in digital signature generation/verification, the scalar k is no longer the private key, but an attacker can easily compute the private key if the scalar k is extracted.

Each kP execution has its duration, consumes energy, and emits electromagnetic radiation. These measurable physical parameters or effects depend on the implemented algorithm, the technology in which the electrical circuit is implemented, as well as on the inputs, i.e., the EC point P and the scalar k. The analysis of the measured power or electromagnetic traces of kP execution(s) with the goal to reveal the scalar k is known as side-channel analysis (SCA) attacks.

For example, localized electromagnetic analysis attacks exploit the fact that the use of registers during an execution of a cryptographic operation is key dependent. The placement of registers, i.e. their coordinates in the cryptographic chip die, are fixed in hardware implementations. Analysis revealing which of the registers is active at the certain time can be used for successfully revealing the key.

Another world-wide known way to extract the secret information, i.e., secret or private cryptographic keys, is an injection of fault(s) into registers using for example a laser beam and analysis of the behaviour of the attacked circuit. This is referred to as fault injection (FI) attacks.

In computer science, fault injection is a testing technique for understanding how computing systems behave when stressed in unusual ways. This can be achieved using physical- or software-based means, or using a hybrid approach. Widely studied physical fault injections include the application of high voltages, extreme temperatures and electromagnetic pulses on electronic components, such as computer memory and central processing units. By exposing components to conditions beyond their intended operating limits, computing systems can be coerced into mis-executing instructions and corrupting critical data.

The propagation of a fault through to an observable failure follows a well-defined cycle. When executed, a fault may cause an error, which is an invalid state within a system boundary. An error may cause further errors within the system boundary, therefore each new error acts as a fault, or it may propagate to the system boundary and be observable. When error states are observed at the system boundary they are termed failures. This mechanism is termed the fault-error-failure cycle and is a key mechanism in dependability.

While such FI attacks have been successful performed in the past, they require a significantly increased preparation time, and are not always feasible. Further, also multi-fault injection attacks, multi-spot laser injection attacks as well as multi-probe localized EM analysis attacks have been successful performed in the past. Currently, the equipment for double laser fault injection attacks is available. These attacks exploit knowledge about the fixed placement of the registers/blocks on the die of the attacked cryptographic chip.

### GENERAL DESCRIPTION OF THE INVENTION

It is an object of the present invention to improve the resistance of cryptographic hardware accelerators, which perform computational operations, in particular against fault injection attacks.

According to a first aspect of the invention, a cryptographic hardware accelerator is disclosed. The cryptographic hardware accelerator, also referred to as CHA in this disclosure, is suitable for performing a computational operation in a cryptographic application. Computational operation refers, in the frame of this disclosure, to both a computation performed using the contents of addressed registers or blocks and to a storage operation of the result from the computation to an addressed register or block. The CHA of the first aspect of the invention comprises one or more addressable blocks. The addressable blocks can comprise addressable computational blocks and addressable registers. The computational blocks and the registers are thus referred to as blocks herein. The CHA also comprises a databus for data exchange between the blocks in the form of read-from-bus operations and write-to-bus operations in the course of performing the computational operation and a controller for controlling the data exchange.

The controller is configured to perform, in the course of performing the computational operation, a block addressing operation, using a respective pre-assigned address of the blocks for addressing one or more of the blocks involved in a write-to-bus operation in the data exchange.

When a single target block is addressed in the block addressing operation, the controller is further configured to selectively enable a discrepancy detection operation. For performing the discrepancy detection operation, the controller is configured to perform a comparison block addressing operation. In the comparison block addressing operation, one comparison block among the remaining blocks is selected and the target block and the comparison block selected are addressed for the discrepancy detection operation.

Further, for performing the discrepancy detection operation, the cryptographic hardware accelerator further comprises a discrepancy detection unit that is connected to the blocks and is configured to provide a discrepancy detected signal indicative of whether or not respective contents of the target block and the comparison block differ. When the discrepancy detection operation is enabled, the controller is configured to perform the write-to-bus operation upon determining that the discrepancy detected signal is indicative of non-differing contents of the target block and the comparison block.

According to the invention, the use of discrepancy detection operation can be selected when a single target block (a block whose content will be used for an upcoming computational application, i.e. a computation or a storage operation) is addressed. If the discrepancy detection operation is enabled, one of the available remaining non-targeted blocks is addressed as a comparison block in a comparison block addressing operation, in addition to the target block. For performing the discrepancy detection operation, the CHA includes an additional discrepancy detection unit that is connected to the blocks and configured to receive the contents of the blocks addressed by the comparison block addressing operation, namely the target block and the comparison block selected for that particular discrepancy detection operation, and to provide a discrepancy detected signal, for instance a binary signal, indicative of whether the contents of the target block and the comparison block differ or not. The controller is then configured to perform the write-to-bus operation, i.e., providing the content of the addressed target block to the bus, only when the discrepancy detected signal indicates that the current content of the target block and the comparison block do not differ.

Thus, the present invention is based on the recognition that content comparison, for instance in terms of redundancy, when applied for cryptographic implementations, can serve as an efficient countermeasure against fault injection (FI) attacks, due to the fact that a successful attack requires the same type of the fault in at least two blocks simultaneously, namely the target block and the comparison block. It is important to note that implementing full dual modular redundancy (DMR) as countermeasures requires duplicated chip area, and consume double the energy which can be detrimental in terms of security against side-channel analysis SCA attacks.

Selecting the comparison block, in the frame of the discrepancy detection operation, among the blocks available for performing the corresponding computational/storage operation reduces the footprint of the countermeasure on chip area, and on energy consumption, and also reduces the vulnerability of the CHA with respect to FI attacks by enabling a variation of the location of the comparison block selected on the die.

In principle, every time a single target block is addressed, a different comparison block can be selected, if the discrepancy detection operation is enabled, providing an efficient tool for implementing dynamic reconfigurable redundancy in cryptographic hardware accelerators. In the following, developments of the cryptographic hardware accelerator of the first aspect of the invention will be described.

In an embodiment, upon determining that the discrepancy detected signal is indicative of differing contents of the target block and the comparison block, the controller is further configured to determine, using the contents of the target block and the comparison block, a coupled content or coupled value, to provide the coupled content to the bus in the write-to-bus operation and to provide a warning signal indicative of the coupled content being a non-significant or dummy value. For example, the coupled content can be the result of an OR operation using the differing contents of the target block and the comparison block. Thus, the warning signal indicates that the coupled content is the results of a computational operation where the content of the target block and the comparison block differ and might therefore be non-significant. Enabling this operation mode, provides an increase robustness against side channel attacks. The CHA, based on the warning signal, is aware of the fact that the coupled content or value is not significant from the computational point of view, i.e. might not be the expected result of the intended computational operation.

In a particular embodiment, when a single target block is addressed in the block addressing operation, the controller is further configured to selectively enable a voting operation.

For performing the voting operation, the controller is configured to perform a voting block addressing operation. In the voting addressing operation, an even number of voting blocks among the remaining blocks are selected. In the voting addressing operation, the even number of voting blocks currently selected and the target block are addressed for performing the voting operation. For performing the voting operation, the cryptographic hardware accelerator further comprises a voter unit connected to the every one of the blocks and configured to determine a most repeated content among the respective contents of the target block and the selected voting blocks. When the voting operation is enabled, the controller is configured to perform the write-to-bus operation using the most repeated content determined by the voting unit.

In a preferred embodiment, the controller is configured to select one comparison block among the remaining blocks (i.e., the blocks that are not the target block) for performing the discrepancy detection operation.

Also preferably, in another embodiment, the controller is configured to select two voting blocks among the remaining blocks (i.e., the blocks that are not the target block) for performing the voting operation.

This embodiment enables the use of a countermeasure to FI attacks based on triple modular redundancy (TMR) with reduced chip area footprint and reduced power consumption when compared to full TMR realization for a set of target block and voting blocks with identical functionality. Full TMR requires 2 additional identical fixed, stationary and non-reconfigurable voting blocks per each target block, all three processing the same values in parallel. TMR allows automatic reconstruction of the correct output value assuming that faults/errors occur only in one of the triplicated units. To compare the content of each triplicated blocks in a TMR configuration, a voting circuit is required. The voting circuit provides the error-free value, i.e. performs fault correction, based on the majority principle.

The resistance of CHA against FI attacks is therefore improved significantly by the implementation of a flexible and dynamically reconfigurable redundancy strategy, e.g., duplicated or triplicated. This approach allows the performance of a dynamic selection of the comparison blocks and/or the voting blocks, herein referred to also as redundancy blocks, and thus of the physical coordinates of the active blocks, i.e., the registers that are used for the computational operation or storage operation, thus increasing the complexity of the FI attacks required to successfully extract information about the key. On the other hand, this approach enables a significant reduction of the chip area, which in turn results is lower manufacturing costs.

For instance, at a given time, a given target block B1 can be supported by a second block B2 as a comparison or redundancy block. At another different given time, the same target block B1 can be supported by a third block B3 as comparison/redundancy block, different than the second block B2. The content of B1 will be transferred to the bus only when the content of B1 and B2 (and analogously B1 and B3) do not differ.

For another computational operation, two blocks, e.g. B2 and B4, are selected as voting blocks and can support a target block (e.g. B1). Here, when the voting operation is enabled, the most repeated content among the contents of the target and the voting blocks (e.g., B1, B2 and B4) will be transferred to the bus.

Thus, there are many possibilities, i.e. combinations of the duplets (pairs) and triplets, for support of the target block.

Implementing such flexible support, i.e. the dynamically reconfigurable redundancy, increases the complexity of FI and localized electromagnetic analysis attacks significantly when using such an approach to compare the content of any two registers or blocks, and/or to implement the voting circuit for any 3 registers or blocks. Such an approach can be implemented in hardware, e.g., using for example ASICs or FPGAs.

In a preferred embodiment, for the discrepancy detection operation, the controller is further configured to select, as the comparison block, a block from the remaining blocks that are not the target block that presumably has- the same content as the target block. Additionally, or alternatively, for the voting operation, the controller is further configured to select the even number, in particular two, of voting blocks having presumably the same content as the target block. The CHA keeps track of the presumed content of the blocks. The real content of the block may differ from the presumed content for different reasons, such as, for example, due to a single event upset, also known as single-event error, or as the result of a fault injection attack.

In yet another embodiment, the controller is configured to select the redundancy blocks, i.e., the comparison block for the discrepancy detection operation and/or the even number -preferably two- of voting blocks, using a pre-programmed redundancy-block selection sequence.

In an embodiment, the CHA includes a number of redundant register blocks, e.g. one redundancy register block, two redundancy register blocks, preferably three redundant register blocks, configured as blocks and preferably only addressable via the comparison and/or the voting block addressing operation. The redundancy blocks can therefore be used as comparison blocks and/or a voting blocks for the discrepancy detection operation and for the voting operation respectively.

In an embodiment, the CHA may additionally comprise a random number generator. In this embodiment, the controller is configured to select the one or more of the redundancy blocks to be used using a random number received from the random number generator. In particular, the random number may be used to select from the set of candidate temporary redundancy blocks, for instance register blocks that are currently idle and that have the same content as the target block. In another variant, the random number may be used to select a redundancy block from the set of available redundancy blocks, in particular having the same content as the target block. This further reduces the chances of detecting meaningful block addressing patterns in a SCA or FI attempt.

In another embodiment the controller is configured to selectively enable the discrepancy detection operation, and optionally, the voting operation, using a pre-programmed operation enabling algorithm. For instance, the computational operations -computation and/or storage operation- for which a discrepancy detection operation or a voting operation are enabled can be selected in accordance to the operation enabling algorithm. For instance, in an embodiment, all computational operations addressing a signal target block in the block addressing operation are carried out together with a discrepancy detection operation or a voting operation. In another embodiment, a only a sub set of the computational operations addressing a signal target block in the block addressing operation are carried out together with a discrepancy detection operation or a voting operation. The sub set is determined by the operation enabling algorithm which can be a randomizing operation enabling algorithm.

Different options exist for implementing the block addressing operation and the voting and/or voting block addressing operation. The latter two are herein also referred to as redundancy block addressing operation. In an embodiment, the controller is configured to perform the block addressing operation and the redundancy block addressing operation for a given write-to-bus operation by encoding a block's address and a respective redundancy block's address in a write control word that has one allocated bit position per each block and each redundancy block.

The controller may for instance be configured to perform the block addressing operation and the redundancy block addressing operation for a given write-to-bus operation by encoding the blocks to be addressed in a write control word. Each block can have more than one address selecting the block for write-to-bus operation as well as for read-from-bus operation, denoted further as a first address and dummy (alternative) addresses for the corresponding operation. All addresses of the block, i.e. its first address and its dummy (alternative) addresses, differ from each other but have the identical impact on the functionality: the block will be selected for the corresponding operation using each of the addresses. The write control word has one allocated bit position per each first address and each dummy address for each block. For instance, the bit value '1' at a given bit position of the write control word may indicate that a block having a first address indicated by this bit position of the write control word is to be addressed. And the bit value '0' at this given bit position of the write control word may indicate that this address is not to be used. Besides, blocks addressed by dummy addressed can be also used as redundancy blocks (e.g., comparison block and/or voting block).

In another embodiment, the controller comprises a write-to-bus selection control register for storing the write-to-bus selection control word. In this particular embodiment, the write-to-bus selection control register is connected with the bus via a write logic circuit. The write logic circuit is configured to receive respective bit values from the blocks and from the write-to-bus selection control register and is configured, using the block's bit values and the received bit values of the write-to-bus selection control word, to address the selected block for a write-to-bus operation in accordance with the write-to-bus selection control word.

When the discrepancy detection operation and the voting operation are not enabled, the controller is configured to provide the stored content of the selected block to the bus via a pre-determined signalling path through the write logic circuit.

When the discrepancy detection operation is enabled, the controller is configured to provide the stored content of the selected target block to the bus via the pre-determined signalling path through the write logic circuit upon determining that the discrepancy detected signal (DS) is indicative of non-differing contents of the target block and the redundancy block.

In embodiments including a voting operation, and when the voting operation is enabled, the controller is configured to provide the most repeated content to the bus via a pre-determined voting signalling path through the write logic circuit.

In yet another embodiment, for controlling the data exchange, the controller is further configured to perform, in the course of performing the computational operation,
- a dummy-addressing selection operation to select one or more of the blocks for a dummy addressing operation, and a dummy-addressing operation of the selected one or more of the blocks, for dummy-addressing the one or more of the selected blocks in the write-to-bus operation; wherein
- the controller is configured to perform the dummy-addressing operation using at least one of a set of one or more respective dummy addresses, which are pre-assigned to the selected one or more of the blocks in addition to their respective first address.

The present embodiment based on the recognition that in a data exchange between blocks via the bus, block addressing operations involving different registers or computational blocks consume different amounts of power. A widespread assumption in the relevant art that addressing different blocks, for example addressing different registers, is an identical operation in terms of power consumption is no longer true when using modern measurement equipment, at least for hardware implementations. Measurements performed with such equipment disprove this assumption. Therefore, block addressing operations addressing different blocks are distinguishable from each other and key-dependent block addressing operations may be exploited for successful address bit attacks. Known strategies to prevent a simple SCA cannot protect against horizontal address-bit attacks. Each of the binary kP algorithms - despite their regularity or atomicity - involves a key-dependent addressing of register blocks and/or computational blocks.

Furthermore, the present embodiment breaks with a common implication made in the design and implementation of data exchange processes in cryptographic hardware accelerators. Namely, the present invention recognizes that while it is correct to assign a unique address to each block for implementing the data transfer via the bus in performing a computational operation in a cryptographic application, a commonly implied additional design limitation, namely, to provide and use only one address for each block per block operation (i.e., one address for a write-to-bus operation and one address for a read-from-bus operation), and not more, is overcome by the present embodiment.

Based on these recognitions, the embodiment proposes the use of a dummy-addressing operation of a block. To this end, the controller of the cryptographic hardware accelerator of the invention is not only configured to perform, in the course of performing the computational operation, a block addressing operation using a respective pre-assigned first address of the blocks for addressing the one or more of the blocks involved in a write-to-bus operation in the data exchange. The controller can camouflage the energy consumption of the block addressing operation by its additional capability to perform a dummy-addressing selection operation to select one or more of the blocks for a dummy addressing operation, and a dummy-addressing operation of the selected one or more of the blocks, for dummy-addressing the one or more of the selected blocks in the write-to-bus operation. The dummy-addressing operation is performed by the controller using at least one of a set of one or more respective dummy addresses, which are pre-assigned to the selected one or more of the blocks in addition to their respective first address.

Accordingly, at least one of the blocks may be addressed for at least a write-to-bus operation based on a selection from more than one address, i.e. a set of addresses that is assigned to at least one of the blocks: one address from the set is the first address of the block and all other addresses from the set are dummy addresses of the block. Using any one of the addresses from the set causes the same functionality in the operation of the hardware accelerator, in particular providing the value calculated or stored by the block to the databus; and using more than one addresses from the set in-parallel causes the same functionality as a using a single address from the set.

Thus, while for the purpose of performing a current computational operation in the cryptographic application a respective first address of a block is used for addressing a given block in the write-to-bus operation, the controller may additionally or alternatively select and dummy-address the same block. By using a dummy address of the block that is different from the first address of the block in addition or as an alternative for addressing the same block, a different amount of energy is consumed by the hardware accelerator, one of the reasons being an additional or different routing of control signals involved in addressing the block.

Furthermore, as mentioned, by using a pre-assigned dummy address of the block instead of the equally pre-assigned first address of the block, the dummy addressing operation is still functional in addressing the block for the purpose of the computational operation, no different from using the first address of the block. Also, by using a pre-assigned dummy address of the block not instead of, but in addition to the equally pre-assigned first address of the block, the block is still correctly addressed for the purpose of the computational operation. More than one of the pre-assigned dummy addresses may be used at the same time in addition to the first address, thus adding to the desired camouflaging effect. Also, different dummy addresses and/or different numbers of dummy addresses may be used at different occasions of dummy-addressing a given block in the course of performing the computational operation of the hardware accelerator, further adding to the desired effect.

Only for the purpose of definition of the phrase "computational operation in the cryptographic application" or, in short, of the term "computational operation" in the context of this specification, the dummy-addressing operation is not considered as being comprised by the meaning of the "computational operation in the cryptographic application" or "computational operation".

Moreover, while for the purpose of performing a current computational operation in the cryptographic application the respective first block address of a block is used for addressing the given block in the write-to-bus operation, the controller may additionally select and dummy-address at least one other of the blocks, in addition to addressing the given block using its first address. By additionally dummy addressing a selected one or more of the blocks that is different from the given block, which given block is used for performing the computational operation, a different amount of energy is consumed and dissipated by the hardware accelerator. The dummy addressing operation thus does address a selected block in a write-to-bus operation, but with regard to the computational operation the addressing does not have a functional effect. It adds energy dissipation and makes a determining of the addressed block based on the energy consumption of the block addressing operation difficult if not impossible, which blurs any information that may be detected by a measurement of energy consumption or electromagnetic radiation.

For the dummy-addressing, the controller correspondingly thus uses at least one of the dummy addresses pre-assigned to the blocks. This helps blurring the flow of control signals within the hardware accelerator as well as the "determining" of the blocks performing operation.

This camouflaging of the addressing of blocks of the hardware accelerator required for performing the computational operation of the desired cryptographic application thus prevents or at least reduces the chances of success for the mentioned address bit attacks.

Regarding computational operations considered by the present specification, these generally include different types of operations, in particular both data processing operations, such as calculations, and data storage operations, such as writing to or reading from a data storage such as a register block. However, embodiments of the hardware accelerator of the present invention may limit the application of the dummy-addressing operation to only a fraction of the given types of computational operations, which means one or more, but less than all of the types of computational operations. In particular, the controller may be configured to perform the dummy-addressing operation only in association with block addressing operations to be executed in data processing operations. As an alternative, the controller may be configured to perform the dummy-addressing operation only in association with block addressing operations to be executed in data storage operations. As a further alternative, the controller may be configured to perform the dummy-addressing operation in association with respective block addressing operations to be executed in data processing operations and in association with respective block addressing operations to be executed in data storage operations.

For clarity, the described dummy-addressing operation according to the present invention is associated solely with those blocks of the hardware accelerator that are required for performing the computational operations in performing the cryptographic application, be it in an operational step to be currently performed or in a previous or later operational step.

In other words, the provision of dedicated dummy blocks, which are only used for performing dummy-addressing operations and not in actual computational operations of the cryptographic application, is as such not claimed by the present invention. However, dedicated dummy blocks that are not required in performing actual computational operations of the cryptographic application may additionally be provided in addition to the blocks, to further add to the effect of camouflaging the block addressing operation. In such embodiments, where dedicated dummy blocks are provided in addition to the blocks, the controller is preferably configured to additionally select one or more of the dedicated dummy blocks for the dummy-addressing operation of the blocks. Suitably the controller is configured to perform the dummy-addressing using the respective first block address of a selected dedicated dummy block. However, dedicated dummy blocks may also be assigned a plurality of additional dummy block addresses for the controller to select from in the dummy-addressing operation.

Furthermore, additionally or alternatively to the additional provision of dedicated dummy blocks, and also for improving the camouflaging effect, the dummy-addressing may be dynamically associated with the blocks, i.e., those blocks that are required for the computational operations of the hardware accelerator in performing the cryptographic application. In particular, blocks required in the processing step to be currently performed, but in a previous processing step or in a later processing step may be selected by the controller for a dummy-addressing operation. In this case, such a "required block" is thus temporarily used as a dummy block, namely, while it is not required for the processing step to be currently performed. It may thus be called a "temporary dummy block" to distinguish it from a dedicated dummy block described in the previous paragraph.

In such embodiments, the controller may be configured to select the one or more of the blocks as the temporary dummy blocks for performing the dummy-addressing operation from a predetermined set of candidate temporary dummy blocks. The set of candidate temporary dummy blocks may exclude a fraction of the blocks, i.e., none, one, or a plurality of the blocks, but not all the blocks, from the dummy-addressing operation of the blocks. The set of candidate temporary dummy blocks may be fixed. However, as an alternative, it may suitably be designed to vary dynamically in dependence on a given computational operation to be performed. Thus, the controller may be configured to select the temporary dummy block for a dummy-addressing operation in association with a computational operation to be performed from a set of candidate temporary dummy blocks, the set being associated with this particular computational operation. This may include a design of the set that takes into account a dependence on a context of the given computational operation, i.e., required use of blocks in one or several previous or upcoming computational operations.

As described, a given block may be addressed under its pre-assigned first address when needed for the regular computational operation of the cryptographic application, and/or dummy-addressed under one of its pre-assigned dummy addresses. The controller may thus configured to use only the first address of a given block in the block addressing for the purpose of performing the computational operation, and only one or more of the dummy addresses for the dummy-addressing operation of the block. In other words, there may be a fixed distinction between the first address and dummy addresses of the block in the context of the cryptographic application, i.e., a distinction that is valid for each and every computational operation performed in the cryptographic application.

In alternative embodiments, however, the controller is configured to distinguish dynamically between the first address and the dummy addresses of a given block. These embodiments do not include a block addressing operation in the limited conventional sense of using only a fixed pre-assigned address. Rather, only the dummy-addressing selection operation and the dummy-addressing operation are performed. All addresses assigned to a given block together form a unified set of addresses, and the controller is configured, in the course of performing computational operations involving a given block over time, to distinguish dynamically between the first address and the set of dummy addresses for the given block. The controller may be configured, in the course of performing computational operations involving the given block or dedicated dummy block over time, to select one of the block's addresses from the unified set of addresses as the block's first address dynamically in the context of the dummy-addressing selection operation, thus performing the dummy addressing by performing a selection of different first addresses for the given block at different times. In these embodiments, the first address of a given block varies dynamically at different times over a sequence of computational operations. More specifically, for a given block, the controller may be configured, for a given computational operation, to dynamically select one of the assigned addresses of the unified set as the first block address of this given block for a given computational operation. The remaining addresses of the unified set of addresses assigned to this given block then, per definition, are the dummy addresses of this given block, for the given computational operation, to additionally select from in order to perform additional dummy-addressing in the context of the given computational operation. When the same given block is to be addressed a next time for another computational operation in the course of the cryptographic application, the same or another address may be selected from the unified set as the first address of the block.

In one variant to the mentioned alternative embodiments, the controller is configured to perform the block addressing operation and the dummy-addressing operation for the same block in parallel, i.e., it addresses the same block by its first address and additionally by one or more its dummy addresses. Thus, more than one dummy address may be assigned to a given block in this variant. Also, more than one of the blocks may be used for a dummy-addressing operation at a given point in time. In this case, the mentioned variants of camouflaging the block addressing operation may be employed in parallel, but for different blocks.

The hardware accelerator may additionally comprise a random number generator. In this case, the controller may be configured to select the one or more of the blocks to be used in the dummy-addressing operation using a random number received from the random number generator. In particular, the random number may be used to select from the set of candidate temporary dummy blocks. In another variant, the random number may be used to select a dummy address from the set of dummy addresses assigned to a selected block. This further reduces the chances of detecting meaningful block addressing patterns in a SCA attempt.

In alternative embodiments, the controller is configured to select the one or more of the blocks as the dummy blocks for performing the dummy-addressing operation in the course of performing the computational operation using a pre-programmed dummy-block selection sequence.

Different options exist for implementing the block addressing operation and the dummy addressing operation. The controller may for instance be configured to perform the block addressing operation and the dummy-addressing operation for a given write-to-bus operation by encoding the blocks to be addressed in a write control word. The write control word has one allocated bit position per each first address and each dummy address for each block. For instance, the bit value '1' at a given bit position of the write control word may indicate that a block having a first address or a dummy address associated by this bit position of the write control word is to be addressed using this address. And the bit value '0' at this given bit position of the write control word may indicate that this address is not to be used.

When a dummy addressing operation is performed, several blocks can be addressed as target blocks. When several blocks are addressed as target blocks, and neither the discrepancy detection operation nor the voting operation is enabled, the content provided is not significant, i.e., it might not correspond to the expected result of the intended computational operation (computation or storage operation).

In some embodiments, the controller is additionally configured to perform, in the course of performing the computational operation, the block addressing operation, using the respective pre-assigned first address of the blocks for addressing the one or more of the blocks involved in a read-from-bus operation in the data exchange; and to perform
- a dummy-read-addressing selection operation of one or more of the blocks and a dummy-read-addressing operation of the selected one or more of the blocks, for dummy-addressing the one or more of the selected blocks in the read-from-bus operation; wherein
- the controller is configured to perform the dummy-read-addressing operation using at least one of the set of the one or more respective dummy addresses, which are pre-assigned to the selected one or more of the blocks in addition to their respective first address.

The optional additional dummy addressing in the context of a read-from-bus operation further adds to the desired effect of making a determining of the addressed block based on the energy consumption of the block addressing operation difficult. In comparison with the dummy addressing in the context of the write-to-bus operation, increased care must be taken in designing the controller to perform the dummy-read-addressing selection operation, so as to avoid errors in the desired computational function of the cryptographic hardware accelerator.

In an embodiment, the controller of the cryptographic hardware accelerator may comprise a read-from-bus selection control register for storing a read-selection control word indicative of the one or more addresses of the at least one block to be addressed in the read-from-bus operation to be performed. In these embodiments, a read logic circuit is preferably provided, which receives input from the bus and from the blocks and from the read-from-bus selection control register to provide the value on the bus to the addressed and/or dummy-addressed blocks.

According to a second aspect of the present invention, a method for operating cryptographic hardware accelerator for performing a computational operation in a cryptographic application is provided. The method comprises:
- providing one or more addressable blocks, e.g., computational blocks and/or registers or storage blocks,
- providing a databus for data exchange between the blocks in the form of read-from-bus operations and write-to-bus operations in the course of performing the computational operation; and
- controlling a data exchange, in the course of performing the computational operation, the controlling comprising a block addressing operation, using a respective pre-assigned first address of the blocks for addressing the one or more of the blocks involved in a write-to-bus operation in the data exchange;
   wherein, when the controlling comprises addressing a single target block in the block addressing operation, the controlling further includes selectively enabling a discrepancy detection operation;
   wherein, for performing the discrepancy detection operation, the controlling includes performing a comparison block addressing operation wherein a comparison block among the remaining blocks is selected and the target block and the comparison block are addressed for performing the discrepancy detection operation,
   providing a discrepancy detected signal indicative of whether respective contents of the target block and the comparison block differ or not; and
   performing the write-to-bus operation upon determining that the discrepancy detected signal is indicative of non-differing contents of the target block and the comparison block.

Thus, the method of the second aspect shares the advantages of the cryptographic hardware accelerator of the first aspect of the invention or any of its embodiments.

In the following, embodiments of the method of the second aspect of the invention will be described.

In a development, the step of controlling includes addressing a single target block in the block addressing operation, the controlling further includes selectively enabling a voting operation;
performing a voting block addressing operation wherein an even number of voting blocks among the remaining blocks are selected, preferably two, and the even number of voting blocks and the target block are addressed for performing the voting operation;
determining a most repeated content among the respective contents of the target block and the voting blocks, and
performing the write-to-bus operation using the determined most repeated content

In another embodiment, the method further comprises selecting the redundancy block and/or the even number of redundancy blocks using a pre-programmed redundancy-block selection sequence.

In another yet another embodiment, the method further comprises:
performing, in the course of performing the computational operation, a dummy-addressing selection operation to select one or more of the blocks for a dummy addressing operation and a dummy-addressing operation of the selected one or more of the blocks, for dummy-addressing the one or more of the selected blocks in the write-to-bus operation; and
- performing the dummy-addressing operation using at least one of a set of one or more respective dummy addresses, which are pre-assigned to the selected one or more of the blocks in addition to their respective first address.

The method may further comprise additionally providing dedicated dummy blocks in addition to the blocks, and additionally selecting one or more of the dedicated dummy blocks for the dummy-addressing operation.

As explained, at a given instance, only the block addressing operation of a block using a respective pre-assigned first address of the blocks in a write-to-bus operation in the data exchange may be performed. Or a dummy-addressing operation of the block may be performed, for dummy-addressing the block in the write-to-bus operation. Or both, the block addressing operation and the dummy-addressing operation may be performed, both addressing the same block. Or the dummy-addressing operation may address a different block.

A further aspect of the invention is formed by a computer program comprising instructions to cause the cryptographic hardware accelerator of the first aspect to execute the steps of the method of the second aspect.

Further embodiments will be described in the following with reference to the drawings.

### BRIEF DESCRIPTION OF THE DRAWINGS

Fig. 1 is a block diagram of a cryptographic hardware accelerator according to an embodiment of the present invention;
Fig. 2 is a block diagram of a cryptographic hardware accelerator according to another embodiment of the present invention;
Fig. 3 is a block diagram of a cryptographic hardware accelerator according to another embodiment of the present invention;
Fig. 4 is an illustration of an exemplary block addressing scheme which includes provisions for dummy-addressing operations, as may be implemented and used in a controller of the hardware accelerator of Fig. 3;
Fig. 5 is an illustration of a write control word that may be used in the hardware accelerator of Fig. 3 based on the exemplary block addressing scheme of Fig. 4 in performing write-to-bus operations and dummy-addressing operations;
Fig. 6 is a simplified block diagram of another exemplary cryptographic hardware accelerator;
Fig. 7 is an illustration of an exemplary discrepancy detection unit that can be used in combination with the hardware accelerator of Fig. 6;
Fig. 8 is an illustration of an exemplary voting unit that can be used in combination with the hardware accelerator of Fig. 6;
Fig.9. is an illustration of an exemplary implementation for a voting operation in the frame of a dynamic reconfigurable 5-modular redundancy;
Fig.10 is a flow diagram of a method for operating a cryptographic hardware accelerator for performing a computational operation in a cryptographic application; and
Fig. 11 is a flow diagram of another method for operating a cryptographic hardware accelerator for performing a computational operation in a cryptographic application.

### DETAILED DESCRIPTION OF EMBODIMENTS

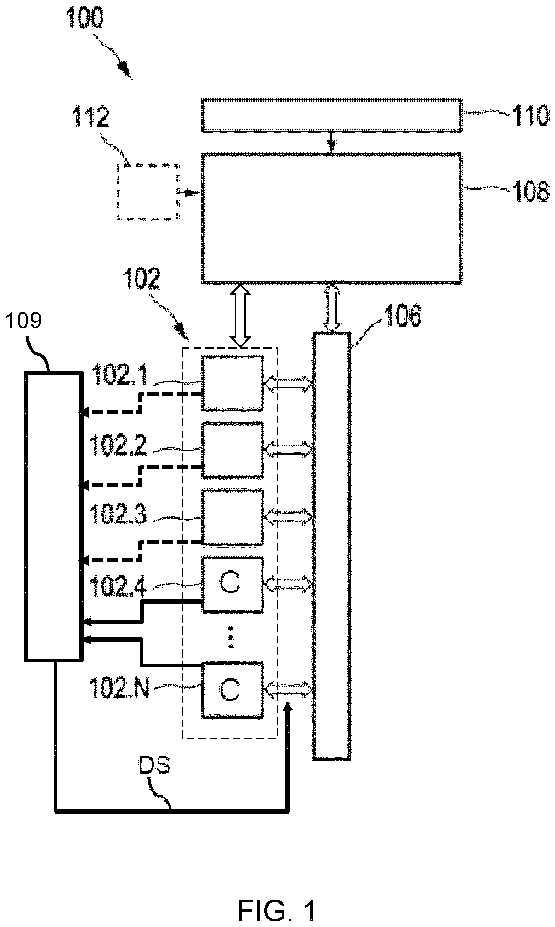

FIG. 1 is a block diagram of a cryptographic hardware accelerator 100 according to an embodiment of the present invention. The cryptographic hardware accelerator 100 may in particular be an elliptic curve (EC) kP hardware accelerator. An implementation of a Montgomery kP calculation or any other binary kP algorithm may be implemented in the cryptographic hardware accelerator 100. Such an algorithm implemented in the hardware accelerator 100 performs a bitwise processing of an I-bit long scalar k=kₗ₋₁kₗ₋₂kₗ₋₃...k₂k₁k₀. The scalar k may represent a digital key. A same sequence of operations may be performed for processing each bit of the scalar k, which may be a bit of a key. The Montgomery kP calculation as well as other binary kP algorithms can be represented as a sequence of finite field operations, i.e., multiplications, additions, subtractions, squaring operations, as well as the operations for storing of calculated (intermediate) values or operands into register blocks.

The following description will refer to the cryptographic hardware accelerator 100 in short as hardware accelerator. Different forms of hardware implementation of the hardware accelerator 100 can be used. For instance, some embodiments are monolithic integrated circuits, others are field programmable gate arrays (FPGA).

Depending on the specifics of the application case, the hardware accelerator 100 comprises a suitable number of N addressable blocks 102.1, 102.2, 102.3, 102.4 ... 102.N. N ranges between 1 and any suitable higher integer. The specific number N of blocks may also depend on a selected accelerator design. The blocks can be computational blocks or registers, also referred to as storage blocks. Some embodiments of EC kP hardware accelerators have two computational blocks. A computational block is instance a multiplier block for performing a field multiplication, or an arithmetic logic unit (ALU) for performing a field addition, field subtraction and/or a field squaring operation. Computational blocks may comprise their own internal registers. Field multiplication, field addition, field subtraction and field squaring operations can be distributed in hardware in different ways. Depending on the application case and hardware implementation, operational capabilities of performing field subtraction or field squaring operations may for instance not be provided in the computational blocks.

For the purpose of the following description, where a distinction between the computational blocks and the registers is not necessary, reference will be made to them commonly as the blocks 102. The same applies to the computational and register blocks of further embodiments illustrated in other figures.

A databus or bus 106 is provided for data exchange between the blocks 102 in the form of read-from-bus operations and write-to-bus operations in the course of performing the computational and/or a data storing operation. The bus 106 may be realized as a muxer with logic gates that react on an address given by a controller 108 (see below). A write-to-bus operation connects the output of an addressed block to the inputs of all other blocks via the muxer. By a read-from-bus operation only the addressed block accepts the values on its input as data for processing.

A controller 108 is connected with the blocks 102 via the bus 106. The controller 108 is configured to control operation of the blocks 102, for example, in determining an EC point multiplication result. In particular, the controller is configured to control the data exchange between the blocks 102. The data exchange in the course of performing a computation and/or a data storing operation -herein referred to as computational operation- involves a block addressing operation for addressing any of the blocks involved in the data exchange.

The controller 108 may be implemented as a state machine containing also an internal register, inter alia for addressing of the blocks in a write-to-bus operation and in a read-from-bus operation. Other bits of the controller's register are may be used to control a kind of a currently performed operation or manage an execution of the operation clock cycle-by-clock cycle. Thus, using the addresses blocks, the controller 108 manages the data flow between the blocks. Additionally, the controller 108 may manage a sequence of field operations. Depending on the signals of the controller 108 (i.e. depending on the value of certain bits of the controller's register) the ALU may perform addition or squaring. The ALU may take two clock cycles for a squaring operation (one clock cycle for obtaining of the operand and second one for the calculation in fact) and 4 clock cycles for an addition of two elements: the 1st operand will be read from the BUS and written to the internal ALU register then the second operand will be read from the BUS and added to the internal register. The multiplier block may take two clock cycles for obtaining both multiplicands from the BUS and, e.g., 9 clock cycles to calculate a field product.

For implementing the desired control function, the controller 108 receives suitable control information stored in a control data storage 110.

When a single block, for example block 102.N is addressed in the block addressing operation, the single block referred to as target block, the controller 108 is further configured to selectively enable a discrepancy detection operation. The enablement or not of the discrepancy detection operation when a single target block is addressed in the block addressing operation may depends on a pre-programmed operation enablement algorithm, which can be predetermined or randomized. In other words, the fact that a single block 102.N is addresses, is a necessary but not a sufficient condition for enabling the fault detection operation.

For performing the discrepancy detection operation, when enabled, the controller 108 is configured to perform a comparison block addressing operation for addressing another block among the remaining blocks 102, referred to as comparison block. In the example shown in Fig. 1, the comparison block is block 102.4. The comparison block addressing operation includes selecting one comparison block 102.4 among the remaining blocks 102.1 - 102.N-1 and addressing the target block and the selected comparison block for performing the discrepancy detection operation.

For performing the discrepancy detection operation, the cryptographic hardware accelerator 100 further comprises a discrepancy detection unit 109 that is connected to the blocks 102, and in particular to the target block 102.N and to the comparison block 102.4. The discrepancy detection unit is configured to provide a discrepancy detected signal DS indicative of whether respective contents C of the target block 102.N and the comparison block 102.4 differ or not. When the discrepancy detection operation is enabled, the controller 108 is then configured to perform the write-to-bus operation upon determining that the discrepancy detected signal DS is indicative of non-differing contents of the target block 102.N and the comparison block 102.4. Preferably, for the discrepancy detection operation, the controller 108 is configured to select the comparison block having -presumably- the same content as the target block. In Fig. 1, the solid arrows linking the target block 102.N and the comparison block 102.4 to the discrepancy determination unit 109 represent an active comparison block addressing whereas the dashed arrows linking the remaining blocks to the discrepancy determination unit 109 represent a currently inactive comparison block addressing. For each comparison block addressing operation, a different comparison block can be selected, thus enabling a dynamic and reconfigurable redundancy.

The addressing of blocks, in particular the comparison block, can be made even less transparent to an external attacker in a variant, which has a random number generator 112. The random number generator 112 is configured to provide an input value for a selection algorithm implemented in the controller 108 for selecting from a set of available comparison blocks, the comparison block that is to be used for the discrepancy determination operation. The random number generator 112 is an optional feature and therefore it is shown with a dashed outline.

When the discrepancy detection operation is enabled, the controller 108 is configured to perform the write-to-bus operation upon determining that the discrepancy detected signal DS is indicative of non-differing contents of the target block and the redundancy block.

Optionally, upon determining that the discrepancy detected signal is indicative of differing contents of the target block and the comparison block, the controller 108 can be further configured to determine, using the contents of the target block and the comparison block, a coupled value, to provide the coupled value to the bus in the write-to-bus operation and to provide a warning signal indicative of the coupled value being a non-significant or dummy value. For example, the coupled value can be the result of an OR operation using the differing contents of the target block and the comparison block. Thus, the warning signal indicates that the coupled value is the results of a computational operation where the content of the target block and the comparison block differ and might therefore be non-significant. Enabling this operation mode, provides an increase robustness against side channel attacks. The CHA, based on the warning signal, is aware of the fact that the coupled value is not significant from the computational point of view, i.e. might not be the expected result of the intended computational operation.

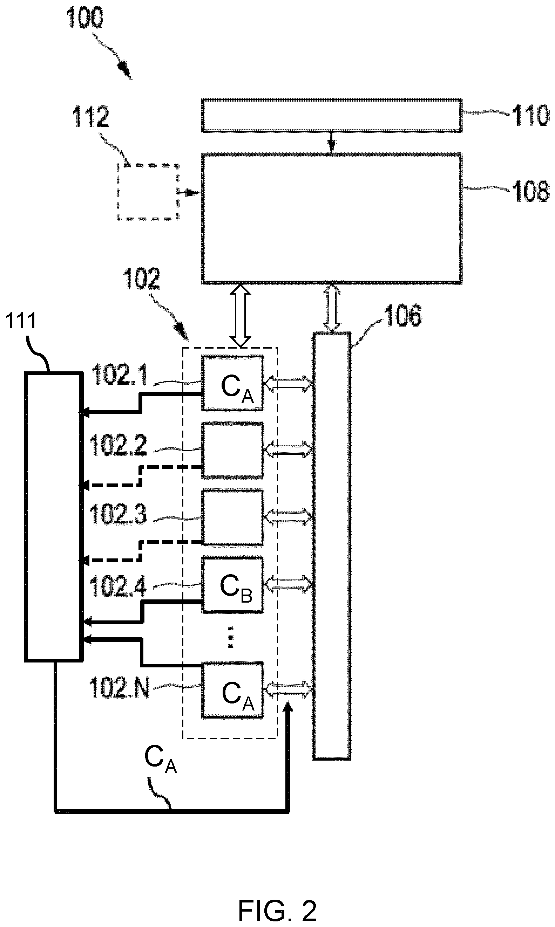

FIG. 2 shows a block diagram of a cryptographic hardware accelerator 100 according to another embodiment of the present invention. In the CHA 100 of FIG. 2, when a single target block 102.N is addressed in the block addressing operation, the controller is further configured to selectively enable a voting operation.

For performing the voting operation, the controller 108 is configured to perform a voting block addressing operation addressing the target block and an even number of voting blocks, in this particular case, two voting blocks 102.1 and 102.4, among the remaining register blocks 102 in addition to the target block 102.N. Which of the remaining blocks are to be used as voting blocks when the voting operation is enabled are determined in the voting block addressing operation.

For performing the voting operation, the cryptographic hardware accelerator comprises a voter unit 111 that is connected to the blocks, in particular to the target block 102.N and to the voting blocks 102.1 and 102.4 select for the current voting operation. The voting unit 111 is configured to determine a most repeated content among the respective contents of the target block and the selected voting blocks. In the particular example shown in FIG. 2, the target block 102.N has a content labelled as CA, the first selected voting block 102.1 has a content labelled as CA and equal to the content of target block 102.N, and the second selected voting block 102.4 has a content labelled as CB, that, for instance due to an FI attack performed on the CHA 100, or for any other reason, is different than CA. In this particular example, when the voting operation is enabled, the controller 108 is configured to perform the write-to-bus operation using the most repeated content determined by the voting unit 111, which corresponds to CA. In Fig. 2, the solid arrows linking the target block 102.N and the voting blocks 102.1 and 102.4 to the voting unit 11 represent an active voting block addressing whereas the dashed arrows linking the remaining blocks to the voting unit 111 represent a currently inactive voting block addressing. For each voting block addressing operation, a different set of voting blocks can be selected, thus enabling a dynamic and reconfigurable redundancy.

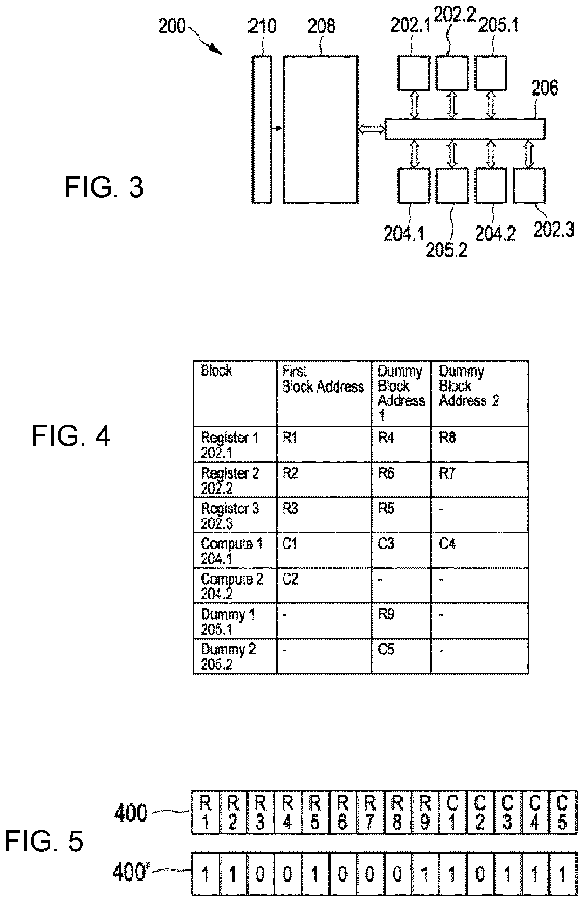

The controller 108 of FIG. 1 or FIG. 2 may also be configured to perform, in addition to a discrepancy detection operation and/or a voting operation, a dummy addressing operation. This operation will be described with reference to FIG. 3, FIG. 4 and FIG. 5 below.

FIG. 3 shows a block diagram of a cryptographic hardware accelerator 200 according to another embodiment of the present invention, FIG. 4 is a table representing an exemplary illustration of a block addressing scheme which includes provisions for dummy-addressing operations, as they may be implemented and used the hardware accelerator 200, and FIG. 5 is an illustration of a write control word that may be used in the hardware accelerator 200 of Fig. 3 based on the block addressing scheme of Fig. 4 in performing write-to-bus operations and dummy-addressing operations.

The controller 208 is further configured to perform a dummy-addressing operation of a block as a part of the addressing operation of the block. The dummy-addressing operation comprises additionally addressing one or more of the blocks (see blocks 102 in FIG. 1 or FIG. 2) that are selected as dummy blocks for either a read-from-bus operation or a write-to-bus operation. The blocks used for the dummy-addressing operations may be dedicated dummy blocks that are used only for the dummy-addressing operations. However, the dummy-addressing operations may also be performed using blocks that are used as regular register or computational blocks at other instances during the performance of the computational operation to be performed by the hardware accelerator 200.

The hardware accelerator 200 has a similar structure as that of FIG. 1 or FIG.2, but includes a limited number of blocks, namely, N=3 register blocks 202.1, 202.2, 202.3, M=2 computational blocks 204.1, 204.2, and two dedicated dummy blocks 205.1, 205.2. This exemplary block structure may be varied to form other embodiments. In particular, the number of register blocks, computational blocks and dummy blocks may be selected differently in accordance with the requirements of an application case. It is noted that the provision of dedicated dummy block is an optional addition and not a requirement in accordance with the present invention. Other embodiments do not have dedicated dummy blocks.

The block addressing scheme implemented in the hardware accelerator 200 of FIG. 3 is illustrated by FIGS. 4 and 5. Corresponding control information stored in the control data storage 208 is represented in table form in FIG. 4, but may take any other suitable form, including a hardwired implementation. The left column of the table of FIG. 4 lists the blocks of the hardware accelerator 200, which are not only listed under their respective reference label, but also with an identifier such "Register1", "Compute1", "Dummy1" for better readability of the following explanation. To perform the block addressing operation for controlling the data exchange in the course of performing the computational operation, the controller 208 addresses the blocks using respective pre-assigned first addresses assigned to the blocks, which in the table of FIG. 4 are shown in the second column from the left and labelled as "first block address". For instance, the register block Register1 has an assigned first address R1, and the block computational block Compute1 has an assigned first address C1. The particular block's addresses shown in FIG. 3 are chosen for explanatory purposes and will typically differ in technical implementations.

In operation, the controller 208 performs the dummy-addressing operation by further addressing the blocks using their respective dummy addresses that are assigned to the blocks in addition to their assigned respective first address. In the present exemplary embodiment, the blocks Register1, Register2, and Register 3 as well as the block Compute1 not only have a first address as assigned by the second column from the left, but also a first dummy address, as shown in the third column from the left which carries the headline "Dummy Block Address 1". Some of the blocks additionally have an assigned second dummy address. For example, the block Register1 has a first dummy address R4, and a second dummy address R8. Other blocks may not have any assigned dummy address, such as the block Compute2 in the present example. The dummy addresses have the structure and appearance of the "regular" first addresses and can thus not be per se recognized as dummies. In the present example, the blocks Dummy1 and Dummy2 are used in dummy-addressing operations only and thus form dedicated dummy blocks. They thus do not have an assigned first block address, but only an assigned dummy address, corresponding to the usage of the dummy addresses and meaningful addresses described herein. More than one pre-assigned dummy address may be provided also for such dedicated dummy blocks.

In operation, the controller 208 of the cryptographic hardware accelerator 200 performs a dummy-addressing operation in parallel to the block addressing operation to be performed. The controller may be configured to perform the block addressing operation for controlling the data exchange in the course of performing the computational operation, by addressing the blocks using respective fixed first addresses assigned to the blocks, and to perform the dummy-addressing operation by further addressing at least one of the blocks using at least one of a set of one or more respective fixed dummy addresses assigned to the at least one of the blocks in addition to its assigned first address corresponding control information defining a sequence of block addressing operations in accordance with the implemented algorithm is stored in the control data storage 210. In accordance with the present invention, some selected or all block addressing operations additionally address one or more of the blocks, which for a particular block addressing operation are selected as dummy blocks for either a read-from-bus operation or a write-to-bus operation. A block selected for a dummy-addressing operation may be addressed twice or even three times in parallel, i.e. at the same time. In case of addressing it twice, it is addressed using its first block address and at the same time using its first or second dummy address. In another implementation, a given block may be addressed under its first address only when needed for the regular computational operation, and under one or more of its assigned dummy addresses when the given block is not needed for the regular computational operation.

The addressing of blocks, which is required for performing the computational and/or data storing operation in a computational kP algorithm is key dependent. Thus, involving dummy-addressing operations which are alternative and may be functional or non-functional for regular key-dependent block computational operations serves to camouflage any patterns in the regular block addressing operations. In absence of the dummy-addressing operations, such patterns might be detectable for example in horizontal address-bit attacks and eventually allow retrieving secret data such processed key bit values, i.e. the bit values of the processed scalar k. Thus, the combination of block addressing operations with dummy-addressing operations prevents or at least reduces the chances of success for the mentioned address bit attacks.

To achieve the desired effect, a dummy-addressing operation need not be performed with each block addressing operation. It may be performed at pre-selected instances during performance of the overall cryptographic computational algorithm. Dummy addressing is in particular useful in the context of any key-dependent block addressing operation that is based on a secret key.

FIG. 5 is an illustration of a particular encoding solution for a write control word to be used for addressing blocks. A general representation of the write control word 400 has a number of bit positions corresponding to the number of blocks to be addressed. The write control word thus has one allocated bit position per each first address of each block and each dummy address of each block. An exemplary assignment of the bit positions is shown for the write control word 400 by a respective entry corresponding to the block addresses used in FIG. 4 in each bit position. The bit value '1' at a given bit position of the write control word may indicate that a block having a first address or a dummy address associated by this bit position of the write control word is to be addressed using this address. And the bit value '0' at this given bit position of the write control word may indicate that this address is not to be used.

The order of the assignment of bit positions to block addresses within the write control word, i.e., the bit position to be used for a given block address, may be pre-stored in the control data storage 210 and can be selected arbitrarily in accordance with a desired implementation design.

An exemplary write control word 400' as used during operation of the hardware accelerator 200 as the bit value '1' for those blocks addresses that are to be included in a current block's addressing operation, and the bit value '0' for those other blocks that are not to be included in the current block's addressing operation. For example, according to the write control word 400', the first address R1 is to be used for the register block Register1, which the dummy address R4 assigned to the same block Register1 is not to be used. However, the dummy block Dummy1 is to be addressed using its dummy address R9, and the computational block Compute1 is to be addressed under its first address C1 and additionally using a first dummy address C3 and using a second dummy address C4.

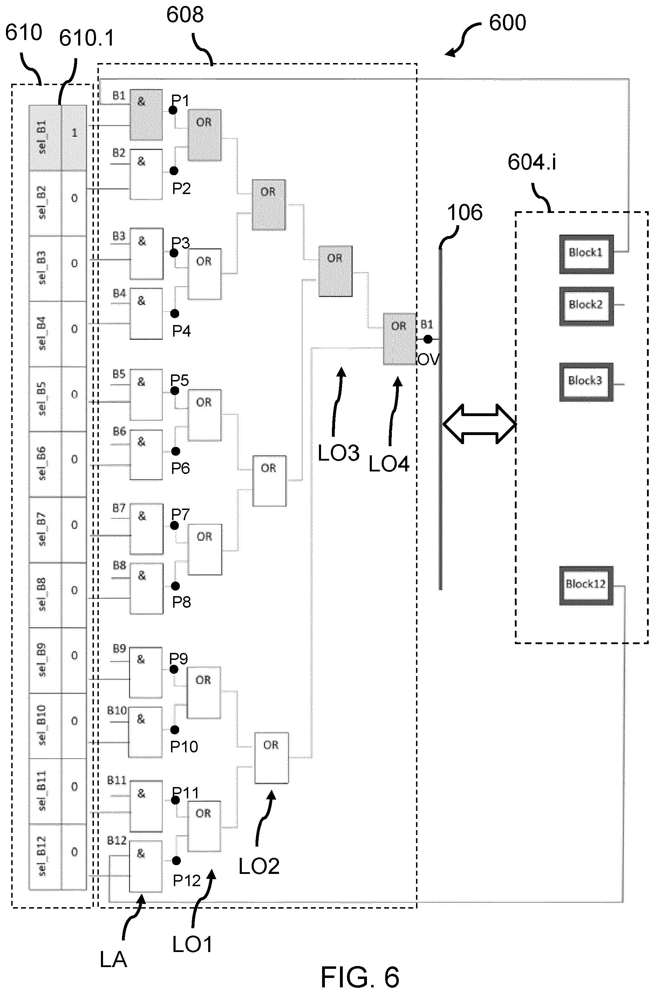

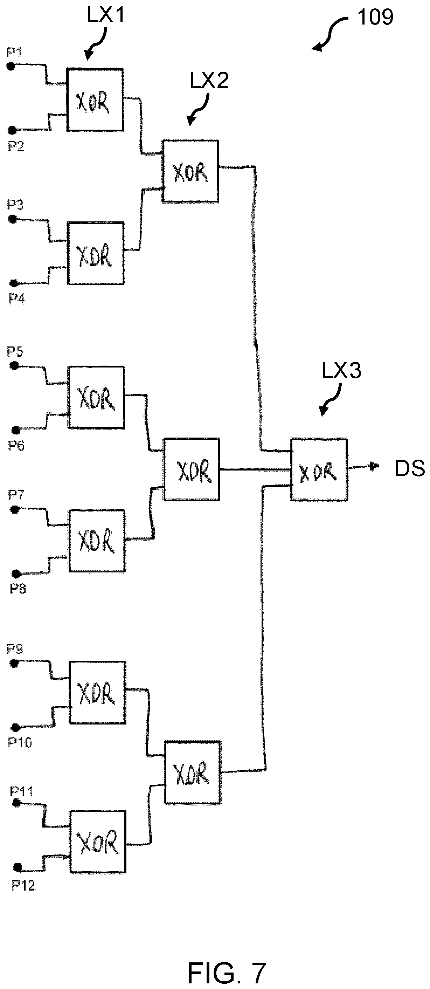

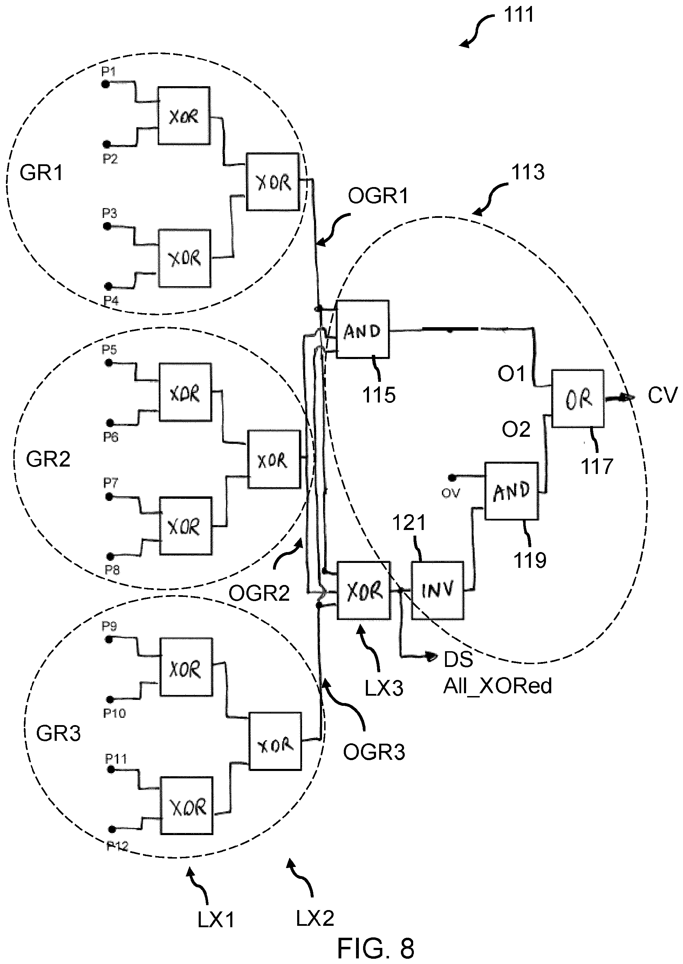

The following description of FIGS. 6 to 8 turns to a concept of hardware implementation that is capable of implementing the discrepancy detection operation (FIG.7) and the voting operation (FIG.8), as well as dummy-addressing operations, for instance in read-from-bus operations (FIG. 6).

FIG. 6 is a simplified block diagram of an exemplary cryptographic hardware accelerator 600. The cryptographic hardware accelerator has a controller 610 with a write-to-bus control part 608 indicated in a dashed box. The controller 610 also includes a read-from-bus control part (not shown) and write-to-bus selection control register 610.1. The write-to-bus control part 610 is fed by the write-to-bus selection control register 610.1 of the controller that receives and stores a write control word to be used for a current write-to-bus block addressing operation. In the write-to-bus control register 610.1, a respective bit sel_Bi, i=1,2,3,...,12, is set to the high value if a corresponding block 604.1, i=1,2,3, ...,12 of the blocks 604.1, 604.2, 604.3, ..., 604.12 is to be selected for writing the bit Bi, i=1, 2, 3...12, stored in the selected block to the databus 106. The write control word in this exemplary implementation thus corresponds to that explained in the context of FIG. 5. A write logic circuit comprised by a write-to-bus control part 608 comprises a multiplexer circuit that provides a write signalling path for controlling provision of the bit value stored in the register 604.i to the databus 106. Specifically, the write logic circuit comprises an input layer LA of parallel AND-gates, labelled as &. Each of the AND-gates receives the stored bit value Bi from an associated one of the blocks 604.i and an associated selection control bit sel_Bi of the write selection control word stored in the write-to-bus selection control register 610.1. It is noted that the present example, for reasons of simplicity of illustration, only shows one bit wide inputs for the blocks 604.i. In real-life implementations, the inputs to the blocks can have a larger width, providing several bits in parallel. Thus, the inputs and outputs of the logic circuit blocks are usually n bits wide. Only because of this simplification made in the design of FIG. 6, the exemplary embodiment of FIG. 6 shows simple logic gates. In other embodiments, the logic implemented here for instance by simple AND-gates is implemented as a more complex logic circuit block with a plurality of AND-gates.

Returning to the description of the simplified example of FIG. 6, the write logic circuit 608 further comprises one or more subsequent layers LO1, LO2, LO3 and L04, of parallel OR-gates, labelled as OR, which each receive input from a respective unique pair of the gates of the respective preceding layer, until the bus receives input from a last layer having only one OR-gate. The output of this last layer of OR gates is referred to as the output value OV. For instance, as shown in FIG. 6, a first layer LO1 of OR-gates contains six OR-gates, a second layer LO2 contains 3 OR-gates, and a third and fourth layer LO3 and LO4 each contain one OR-gate, each fed with input from a pair of OR-gates from preceding layers. For instance, the OR gate in the third layer LO3 receives two inputs from OR gates of the immediately preceding second layer LO2, whereas the OR gate in the fourth layer LO4 receives an input from the third layer LO3 and an input from the second layer LO2.

When no discrepancy detection operation and no voting operation is enabled, the write-to-bus control part 608 provides the value of the selected block. The 12 bits of the Controllers' register 610.1 denoted as sel_B1, sel_B2 ... sel_B12 signals are responsible for the "write-to-bus" operation. The addressing here is implemented as AND function of the output of each single block and its addressing signal. In this example, only one of the Q=12 blocks can be selected for the "write-to-bus" operation providing the content of the selected block to the bus. Please note that many blocks can be selected for the "write-to-bus" operation simultaneously and their values will be OR'ed bitwise and the result will be provided to the bus. This value has to be processed further as a dummy value, which does not correspond to the content of any of the blocks. This kind of data exchange between the blocks cannot, at this stage, support any redundancy, cannot detect a fault if two blocks selected for the "write-to-bus" operation must provide the same value and cannot correct (via voting) the value on the bus. This also holds true if 3 identical blocks containing the same value are selected for the "write-to-bus" operation. Thus, while this multiplexer can be used to sophistically organise flexible use of identical blocks it does not provide any fault detection or correction options.

For example, if Block1, ..., Block6 are identical registers or storage blocks, Block7, Block8, Block9 are unique computational blocks implementing mathematical functions and Block10, Block11, Block12 are also registers or storage blocks identical to Block1, ..., Block6, addressing "redundant" register blocks (e.g., Block 1 and Block 10 (as a pair), or Block 3 and Block12, or Block 1, Block 5 and Block 11 (as a triplet) is possible. However, neither fault detection nor fault correction is implemented. If one of the addressed register blocks has an error, the value provided to the bus will be incorrect, and the error will be undetected.

In summary, the value provided to the bus 106, referred to as output value OV, corresponding to FIG 6 can be defined as:
OV = Bi if only 1 block Bi is selected for "write-to-bus" setting address-bit sel_Bi=1;
OV = (Bi OR Bj) if 2 different blocks Bi and Bj are selected for "write-to-bus" setting their address-bits sel_Bi= sel_Bj =1;
OV = (Bi OR Bj OR Bq) if 3 different blocks Bi, Bj, Bq are selected for "write-to-bus" setting their address-bits sel_Bi=sel_Bj=sel_Bq=1.

In general, OR of all the blocks selected for "write-to-bus" setting their address-bits to 1, i.e. as OR function outputs of all the blocks AND'ed with their address-bit state (sel_BI signal): $OV = OR \left(\left(sel_B1 AND B1\right),\left(sel_B2 AND B2\right),…,\left(sel_B12 AND B12\right)\right) .$

Thus, this multiplexer can be described in a straightforward way as a finite state machine but it provides neither error detection nor error correction in the case that several different register blocks (with expected identical content) are selected for the "write-to-bus" operation. Please note that there are no restrictions for the selection of the blocks Bi, Bj, Bq.

When a single target block is addressed in the block addressing operation, the controller 610 is further configured to selectively enable a discrepancy detection operation, as it will be explained with further reference to FIG. 7, which shows an exemplary HW implementation of a discrepancy detection unit 109 for use with the CHA 600 of FIG. 6.

The dots labelled P1-P12 in FIG. 7 corresponds to the outputs of the layer LA of AND-circuits & shown in FIG. 6, and also labelled accordingly. Thus, the discrepancy detection unit 109 is connected to the blocks Block 1,..., Block 12 via the AND-circuits LA. From the points P1-P2 the circuit branches. One branch, as discussed with reference to FIG. 6, results in the value OV. The second branch, shown in FIG. 7, provides discrepancy detection or fault detection capabilities for any 2 different blocks Bi and Bj selected for "write-to-bus". When the discrepancy detection operation is enabled, this indicates that the content of the target block and the redundancy block are expected to be identical. The enablement can be, for instance, performed by providing an enabling signal set to true, if an error or a discrepancy between the contents of the block has to be detected.

During the redundancy block addressing operation associated to the discrepancy detection operation, a target block and a redundancy block (comparison block) have to be addressed. The controller can for instance check this by checking if the sum of all signals sel_Bi is equal to 2 for all Q blocks, i.e. for i ∈{1,2,...,Q}.

The discrepancy detection unit 109 is configured to provide a discrepancy detected signal DS indicative of whether or not respective contents of the target block and the redundancy block differ. The discrepancy detected signal DS can be implemented in the example shown in FIG. 7 as

DS=XOR((sel_B1 AND B1),(sel_B2 AND B2), ... ,(sel_B12 AND B12)), or, in general, for Q blocks, $DS = XOR \left(\left(sel_B1 AND B1\right),…, \left(sel_BQ AND BQ\right)\right. ;$ where (sel_Bi AND Bi) corresponds to the signal at point Pi, i.e. the output of the AND circuits & of the layer LA of FIG. 6.

Due to the property of the XOR function, the discrepancy detected signal DS will be equal to 1 if the content of two selected blocks Bi and Bj is not identical, and will be equal to 0 if the content is the same. If the discrepancy detected signal is indicative of the contents being the same, e.g. 0 in this particular example, the output value (OV, see FIG. 6) is free of discrepancy and can be written to the bus in the write-to-bus operation.

The exemplary implementation of the discrepancy detection unit of FIG. 7 is suitable for a CHA including 12 blocks 604.i, however it can be easily adapted for a CHA with a different number of blocks. For instance, for any given number of blocks, pairs of (Sel_Bi AND Bi) signals are compared in a first XOR layer LX1, and the results are fed pairwise to a subsequent second XOR layer LX2, until there are only two or three outputs, which can be fed to a last XOR layer (e.g. LX3) for obtaining the discrepancy detected signal DS.

FIG. 8 is an illustration of an exemplary voting unit 111 that can be used in combination with the hardware accelerator of FIG. 6 and that also provides discrepancy detection capability for comparing the content of two blocks, and can therefore also be used as a discrepancy detection unit. The voting unit 111 includes the three XOR layers discussed with reference to FIG. 7 and is thus also configured to provide a discrepancy detection signal when the contents of two blocks are selected for comparison, as discussed above. The three XOR layers LX1, LX2 and LX3 shown in Fig. 7 is merely an example of a suitable implementation that provides the value $DS = XOR \left(\left(sel_B1 AND B1\right),…, \left(sel_BQ AND BQ\right)\right.$

When the voting operation is enabled, e.g., by the provision of a corresponding voting enabling signal, the voting unit 111 is advantageously configured to provide a correction functionality when three blocks are addressed, namely a target block and two redundancy blocks. For this, the controller can be configured to check if exactly three blocks are being addressed, for instance by checking that the sum of all sel_Bi signals is 3.

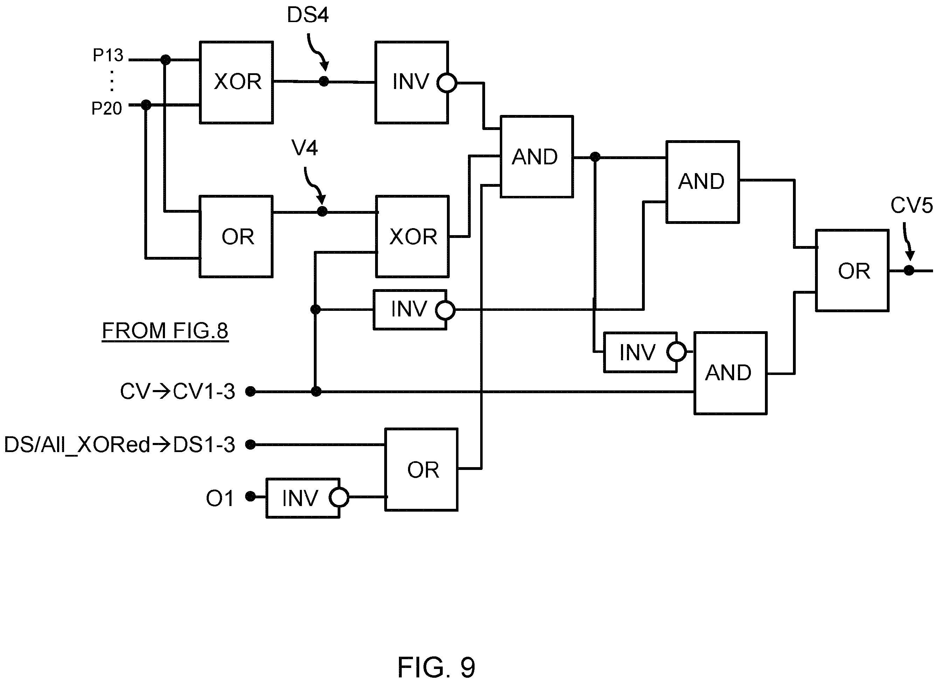

The voting unit 111 is configured to implement the following voting functionality, as an implementation of a dynamic reconfigurable triple modular redundancy TMR, for three different blocks, namely Bi with i E{1,2,...,N1}., Bj with j ∈{N1+1,N1+2,...,N1+N2} and Bk with k∈{N1+N2+1,N1+N2+2,...,N1+N2+N3=Q}. For example, N1, N2 and N3 can be equal to 4, for the case of the voting unit 111 of FIG. 9, but the value for N1, N2 and N3 can differ. This results in the formation of three different groups GR1, GR2 and GR3. It is preferred, that each of the addressed blocks for the voting operation, namely the target block and the voting blocks, belongs to a different group of blocks.

The outputs of the different groups GR1, GR2 and GR3 can be expressed as: $OGR 1 = XOR \left(\left(sel_B1 AND B1\right),\left(sel_B2 AND B2\right),\left(sel_B3 AND B3\right),\left(sel_B4 AND B4\right),\right.$ $OGR 2 = XOR \left(\left(sel_B5 AND B5\right),\left(sel_B6 AND B6\right),\left(sel_B7 AND B7\right),\left(sel_B8 AND B8\right);\right.$ and 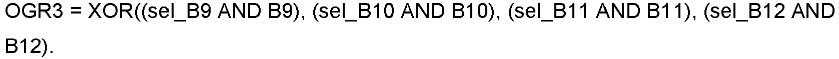 OGR3 = XOR((sel_B9 AND B9), (sel_B10 AND B10), (sel_B11 AND B11), (sel_B12 AND B12).

In the XOR layer LX3, the outputs OGR1, OGR2 and OGR3 are XOR'ed resulting in a value all_XORed that can be expressed as $all_XORed = \left(OGR1\right) XOR \left(OGR2\right) XOR \left(OGR3\right) .$

The all_XORed value corresponds to the discrepancy detected signal DS (see Fig. 7) when the number of addressed blocks is two.

The segmentation of the set of addressed blocks into three groups and the condition that each of the addressed blocks belongs to a respective different group is necessary for performing error correction in case all of the three addressed blocks have an identical content of "1". Thus, in a CHA configured to perform a voting operation, the blocks 604.i are advantageously divided into non-overlapping groups of blocks, such as GR1, GR2 and GR3 of Fig. 8, and each one of the target block and the voting blocks are included in a respective one of the different non overlapping groups of blocks. The blocks belonging to a given group do not necessary have to be neighbouring blocks Bm, Bm+1, Bm+2.... Also, the number of blocks of each groups does not necessarily have to be equal. It is necessary that each of the three groups, irrespectively of the blocks that constitute said group, provide a respective output signal OGR1, OGR2 and OGR3, each associated to a respective one of the target block and the two voting block selected in the voting block addressing operation.

A correction when one of the contents of the addressed block is incorrect (e.g. due to FI attack attempt) can be implemented in a correction section 113 of the voting unit 111, where the corrected value CV corresponds to the most repeated content among the addressed blocks and can be expressed as: $CV = \left(OGR1 AND OGR2 AND OGR3\right) OR \left(OV AND NOT\left(all_XORed\right)\right) .$

The output values OGR1, OGR2 and OGR3 of the different groups GR1, GR2 and GR3 are provided to an AND circuit 115, whose output O1 is fed to an OR circuit 117.

The output value OV of the first branch (see FIG. 6) is provided as input to an AND circuit 119 together with the inverted all_XORed signal, that results from inverting the all_XORed signal by means of an inverter circuit 121. The output O2 of the AND circuit 119 is the provided as a second input to the OR circuit 117. The output of the AND circuit 117 is the corrected value, which corresponds to the most repeated content among the addressed blocks.

The following table 1 illustrates the possible combinations of values for three selected blocks Bi, Bj and Bk

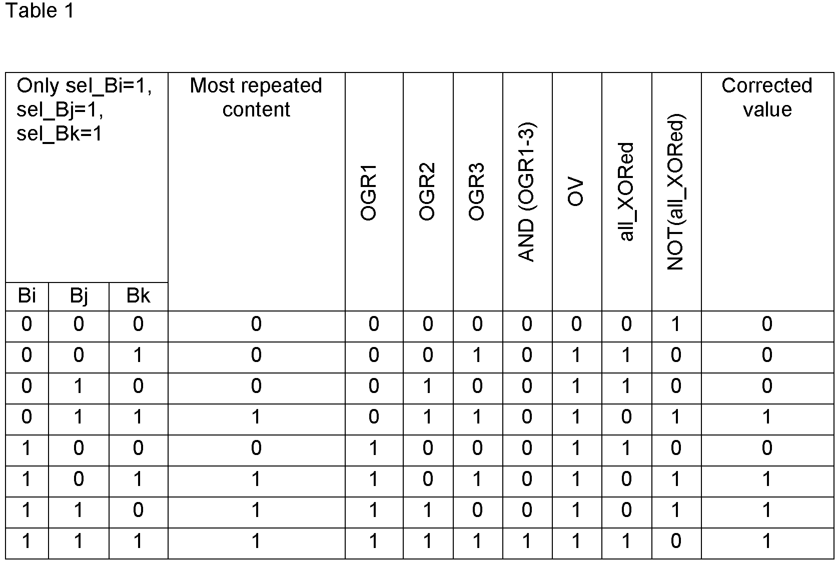

The values in the column "most repeated content" corresponds to the result of a voting operation using the contents of the addressed blocks (bi, Bj and Bk). As it can be seen comparing the values of the "Most repeated content" column and those of the "Corrected value" column, these agree for all possible combinations. Thus, when the voting operation is enabled, the voting unit 111 provides the most repeated content as corrected value, in case the content of one of the blocks addressed is faulty or otherwise compromised (e.g., by an attempted FI attack).

Thus, the value OV has to be written to the bus in the following cases, namely when:
- only one block is addressed for the write-to-bus operation; or
- more than three blocks are addressed for the write-to-bus operation; or
- two blocks are addressed for the write-to-bus operation, the discrepancy detection operation is enabled and the discrepancy detected signal is indicative of non-differing contents; or
- two or three blocks are addressed for the write-to-bus operation but neither the discrepancy detection operation nor the voting operation is enabled.

The corrected value CV has to be written to the bus when:
- three blocks are addressed for the write-to-bus operation and the voting operation is enabled.

The cases where more than one block is addressed but neither the discrepancy detection operation is enabled correspond to dummy addressing operations. In principle, any number of blocks can be selected for the "write-to-bus" operation simultaneously and their values will be OR'ed bitwise and the result will be provided to the bus. This value has to be processed further as a dummy value, which does not correspond to the content of any of the blocks.

Fig. 9 shows an exemplary implementation for a voting operation wherein four voting blocks are selected in the voting block addressing operation, thereby implementing a dynamic reconfigurable 5-modular redundancy. The implementation involves combining the dynamic reconfigurable TMR approach explained with respect to Fig. 8, with an additional DMR functionality of the other two additional voting blocks selected in addition to the two previously selected.

An exemplary extension to the diagram discussed with reference to Fig. 8 with additional addressable blocks 604.13-604.20 is schematically shown in Fig. 9. The dots labelled as P13 ... P20 have the values (sel_B13 AND 13),... (sel_B20 AND B20). The two additional voting blocks are selected from a group GR4 that includes the blocks 13-20. In general the additional blocks are selected from a group that does not contain any of the target blocks and the two voting blocks used for dynamic reconfigurable TMR as explained above (i.e., one target block and two voting blocks). The number of blocks being 20 is only an example and the circuit can be easily adapted effortlessly for other numbers of blocks.

The values P13, ..., P20 are XOR'ed resulting in a value DS4. $DS 4 = XOR \left(\left(sel_B13 AND B13\right),\left(sel_B14 AND B14\right),…\left(sel_B20 AND B20\right)\right) .$

In parallel, the values P13, ..., P20 are OR'ed, resulting in a value V4 $V 4 = OR \left(\left(sel_B13 AND B13\right),\left(sel_B14 AND B14\right),…\left(sel_B20 AND B20\right)\right) .$

The extension of the circuit shown in Fig. 9 also receives the values CV, DS (also referred to as All_XORed, and O1 (see Fig. 8). The value CV is referred to as CV1-3 in the following since it is the corrected value from the three groups GR1, GR2 and GR3 shown in Fig. 8. The value DS will be referred to as DS1-3 since it also corresponds to the XOR'ed value of the groups GR1, GR2 and GR3 of Fig. 8.

In the case that the condition [(O1 = 1) OR (DS1-3 = 0) OR (DS4 = 1)] is TRUE, the value DS1-3 is written to the bus. When O1 = 1, the value CV1-3 is written to the bus as CV5 and is independent from the values in the blocks 13, ..., 20 because Bi = Bj = Bk = 1. When DS1-3 =0 the value of CV1-3 is written and is independent from the values in the blocks 13, ..., 20 because Bi = Bj = Bk = 0. When DS4=1, the value CV1-3 is written to the bus as CV5 because DS4 = 1 indicates that the content of the two additional voting blocks of the fourth group differ, and thus the most repeated content is given by DS1-3.

Else, in the case that the condition [(CV1-3) XOR (V4) = 0] is TRUE, the value CV1-3 is written to the bus as CV5.

Else, the inverse of the value CV1-3 is written to the bus as corrected value CV5.

For an even number (M-1) of selected voting blocks, i.e. if the number of all selected blocks including the target block is M=5, 7, 9..., a similar approach can be implemented by combining dynamic reconfigurable (M-2) modular redundancy with dynamic reconfigurable dual modular redundancy. Here, the corrected value CV5 will be referred to as CV1-5 and combined as explained above with values DS6 (analogous to DS4 above) and V6 (analogous to V4 above). DS6 and V6 implement the additional dynamic reconfigurable dual modular redundancy that is to be combined with the dynamic reconfigurable 5-modular redundancy to obtain the dynamic reconfigurable 7-modular redundancy. Special care is to be provided for the case where in the M-2 modular redundancy the difference between the instances of the most repeated content and the instances of the complementary value is one, and the inputs of the double modular redundancy stage are equal, for example, for a voting operation using 7 blocks and based on a 5-modular redundancy, special care is to be provided when the inputs of the 5-MR are 11100 (three instances of 1, and two instances of 0, in any order) and the inputs of the DMR are 00, and when the inputs of the 5-MR are 00011 (three instances of 0, and two instances of 1, in any order) and the inputs of the DMR are 11.

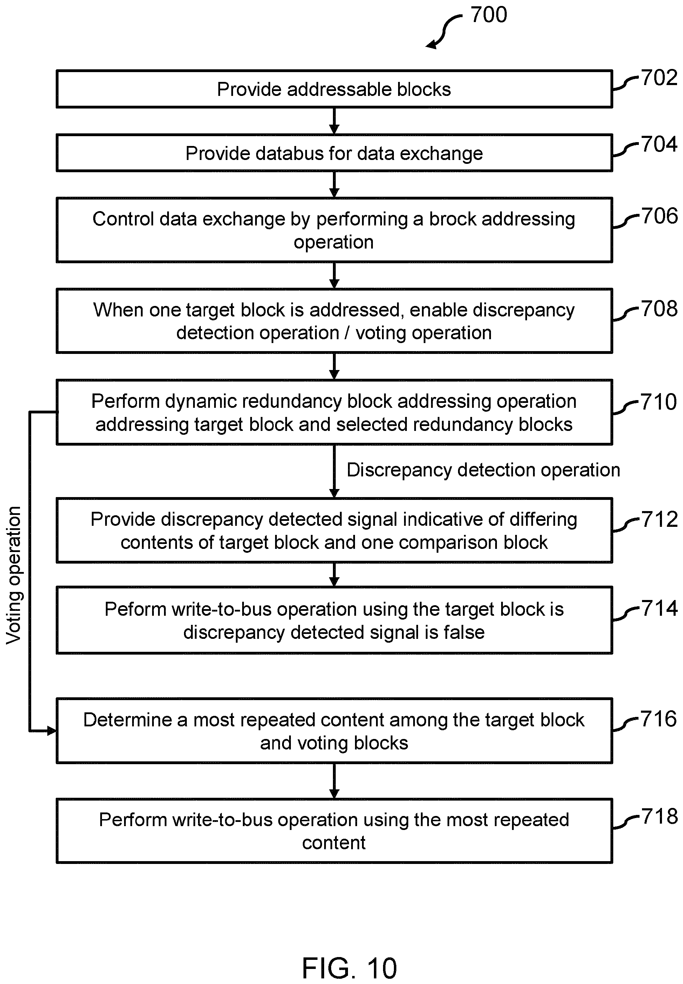

FIG. 10 shows a flow diagram of a method 700 for operating cryptographic hardware accelerator for performing a computational operation in a cryptographic application. The method comprises, in a step 702, providing one or more addressable blocks. The method comprises, in a step 704, providing a databus for data exchange between the blocks in the form of read-from-bus operations and write-to-bus operations in the course of performing the computational operation. The method also comprises, in a step 706, controlling a data exchange, in the course of performing the computational operation, the controlling comprising a block addressing operation, using a respective pre-assigned first address of the blocks for addressing the one or more of the blocks involved in a write-to-bus operation in the data exchange. In the method 700, when the controlling comprises addressing a single target block in the block addressing operation, the controlling further includes, in a step 708, selectively enabling a discrepancy detection operation. In the method 700, for performing the discrepancy detection operation, the controlling includes performing, in a step 710, a redundancy block addressing operation. Here, a comparison block among the remaining register blocks is selected and an addressing of the target block and the comparison block is carried out for the discrepancy determination operation. The method also includes providing, in a step 712, a discrepancy detected signal indicative of whether respective contents (C) of the target block and the selected comparison block differ or not; and, in a step 714, performing the write-to-bus operation upon determining that the discrepancy detected signal is indicative of non-differing contents of the target block and the comparison block, e.g., the discrepancy detected signal is false.

The method 700 may also comprise, in step 708, selectively enabling a voting operation performing and, in step 710, performing the redundancy block addressing operation. Here, an even number -preferably two- voting blocks among the remaining register blocks are selected and an addressing of the target block and the even number of voting blocks is carried out for performing the voting operation. Then, the method may also include, in a step 716, determining a most repeated content among the respective contents of the target block and the redundancy blocks, and, in a step 718, performing the write-to-bus operation using the most repeated content determined.

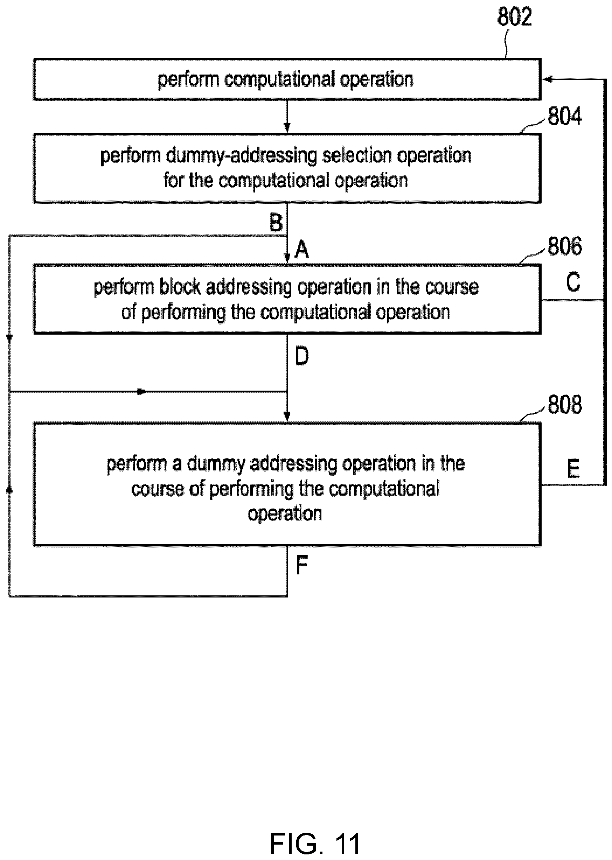

Fig. 11 is a flow diagram of a method for operating a cryptographic hardware accelerator for performing a computational operation in a cryptographic application. The method is based on a cryptographic hardware accelerator that provides one or more addressable computational blocks and a plurality of addressable register blocks (again commonly referred to as blocks). Furthermore, the hardware accelerator provides a bus for data exchange between the blocks in the form of read-from-bus operations and write-to-bus operations in the course of performing the computational operation. In operation of the hardware accelerator, a computational operation is performed (step 802). The computational operation involves a data exchange between the blocks via the databus. In controlling the data exchange, a controller performs a dummy-addressing selection operation for the computational operation. In the dummy-addressing selection operation, the controller determines whether or not to perform one or more dummy addressing operations in the course of the computational operation, and if one or more dummy addressing operations are to be performed, selects a number of dummy addressing operations and the one or more dummy addresses to be used in the dummy addressing. Depending on the selection, different branches of the flow diagram of the method will be followed in the following.
a) In the dummy-addressing selection operation of step 804, the controller may determine that no dummy addressing is to be performed for the current computational operation. In this case, the subsequent processing follows along branches A and C of the flow diagram. In particular in step 806, a block addressing operation in the course of performing the computational operation is performed. In this case, the controller uses what is called the first address in the context of the present specification for addressing the block. After performing the block addressing in the context of the current computational operation, the method branches back to step 802 via branch C to performing the next computational operation. It is noted that the present description of Fig. 10 is not intended to seek patent protection for an embodiment in which only the present variant a) of the process flow is performed at all times if each block has only a single address for the write-to-bus operation as well as a single address for the read-from-bus operations.
b) In the dummy-addressing selection operation, the controller may determine that the block mentioned in variant a), i.e., the block which necessarily needs to be addressed in the context of performing the current computational operation, shall be addressed using only a pre-assigned dummy address that is different from the pre-assigned first address that would be used in step 806. In this case, the processing flow follows branches B and E, jumping from step 804 to step 808, in which the dummy addressing is performed, and then back to step 802 for the next computational operation.
c) In the dummy-addressing selection operation of step 804, the controller may determine that the block to be addressed in the context of the current computational operation shall be addressed using not one, but a plurality of dummy addresses only, which dummy addresses are different from the pre-assigned first address that would be used in step 806. In this case, the processing flow follows branches B, F, and E, repeating the dummy addressing of step 808 for as many addresses as determined in the dummy-addressing selection operation, and then jumps from step 808 to step 802 for the next computational operation.
d) In the dummy-addressing selection operation of step 804, the controller may determine that the same block to be addressed in the context of the current computational operation shall be addressed using both a pre-assigned first address and one dummy address. In this case, the processing flow follows branches A, D, and E.
e) In the dummy-addressing selection operation of step 804, the controller may determine that the same block to be addressed in the context of the current computational operation shall be addressed using both a pre-assigned first address and a plurality of dummy addresses. In this case, the processing flow follows branches A, D, F, and eventually E (after having assigned all dummy addresses).
   Here, it should be noted that the used graphical representation in the form of a flow diagram in Fig. 10 is not to be understood as limiting the technical options for implementing the different cases. As an example, this case e) may be implemented by a performing in parallel the steps along the branches A and C and D, F and E. Also, dummy-addressing with multiple dummy addresses is suitably performed in just one step, that means, not by a sequence of a single dummy addressing steps.
f) In different further variants of the dummy-addressing selection operation of step 804, the controller may determine that the block to be addressed in the context of the current computational operation shall be addressed using its pre-assigned first address, and that one or more temporary dummy blocks or, if present, dedicated dummy blocks shall be dummy-addressed, respectively. In this case, the processing flow follows branches A, D, F, and eventually E (after having assigned all dummy addresses). It is noted that the present description of Fig. 10 is not intended to seek patent protection for an embodiment in which only dedicated dummy blocks are used for dummy addressing if each of the dummy blocks has only a single address per write-to-bus or read-from-bus operation.
g) In different further variants of the dummy-addressing selection operation of step 804, the controller may determine that the block to be addressed in the context of the current computational operation shall be addressed using one or more pre-assigned dummy addresses, and that one or more temporary dummy blocks or, if present, dedicated dummy blocks shall be dummy-addressed. In this case, the processing flow follows branches B, D, F, and eventually E (after having assigned all dummy addresses).

The dummy-addressing selection operation may be implemented in the form of hardwired functionality of a controller of the hardware accelerator, for instance providing pre-defined respective dummy-addressing selection operations for the individual computational operations to be performed. The dummy-addressing selection operation may alternatively or partly be implemented in the form of software executed by a control processor.

In summary, the invention is directed to a cryptographic hardware accelerator for performing a computational operation in a cryptographic application, comprising one or more addressable blocks, a databus and a controller. When a single target block is addressed, the controller is configured to selectively enable a discrepancy detection operation, wherein a comparison block is selected and the target block and the comparison block selected are addressed for performing the discrepancy detection operation. The cryptographic hardware accelerator further comprises a discrepancy detection unit configured to provide a discrepancy detected signal indicative of whether or not respective contents of the target block and the comparison block differ. When the discrepancy detection operation is enabled, the controller is configured to perform a write-to-bus operation upon determining that the discrepancy detected signal is indicative of non-differing contents.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

## Claims

1. A cryptographic hardware accelerator (100) for performing a computational operation in a cryptographic application, the cryptographic hardware accelerator comprising
- one or more addressable blocks (102);
- a databus (106) for data exchange between the blocks in the form of read-from-bus operations and write-to-bus operations in the course of performing the computational operation; and
- a controller (108) for controlling the data exchange, the controller being configured to perform, in the course of performing the computational operation, a block addressing operation, using a respective pre-assigned first address of the blocks for addressing the one or more of the blocks involved in a write-to-bus operation in the data exchange;
wherein, when a single target block (102.N) is addressed in the block addressing operation, the controller is further configured to selectively enable a discrepancy detection operation;
wherein, for performing the discrepancy detection operation, the controller is configured to perform a comparison block addressing operation wherein a comparison block (102.4) among the remaining blocks (102) is selected and the target block (102.N) and the comparison block (102.4) selected are addressed for performing the discrepancy detection operation;
wherein, for performing the discrepancy detection operation, the cryptographic hardware accelerator further comprises:
- a discrepancy detection unit (109) connected to the blocks (102) and configured to provide a discrepancy detected signal (DS) indicative of whether or not respective contents (C) of the target block (102.N) and the comparison block (102.4) differ; and wherein
when the discrepancy detection operation is enabled, the controller is configured to perform the write-to-bus operation upon determining that the discrepancy detected signal (DS) is indicative of non-differing contents of the target block and the comparison block.

2. The cryptographic hardware accelerator of claim 1, wherein when a single target block (102.N) is addressed in the block addressing operation, the controller is further configured to selectively enable a voting operation;
wherein, for performing the voting operation, the controller is configured to perform a voting block addressing operation wherein an even number of voting blocks (102.1, 102.4) among the remaining blocks (102) are selected, and the even number of voting blocks (102.1, 102.4) and the target block (102.N) are addressed for performing the voting operation,
wherein, for performing the voting operation, the cryptographic hardware accelerator further comprises
- a voter unit (111) connected to the blocks (102) and configured to determine a most repeated content among the respective contents of the target block (102.N) and the selected voting blocks (102.1, 102.4), wherein
when the voting operation is enabled, the controller is configured to perform the write-to-bus operation using the most repeated content determined by the voting unit.

3. The cryptographic hardware accelerator of claim 2, wherein for performing the voting operation, the controller is configured to perform the voting block addressing operation addressing the target block and two voting blocks.

4. The cryptographic hardware accelerator of claim 2 or 3 wherein the blocks (102.1,..., 102.N) are divided into non-overlapping groups or blocks (GR1, GR2 and GR3) and wherein each of the target block and the voting blocks is included in a respective one of the different non-overlapping groups of blocks.

5. The cryptographic hardware accelerator of any of the preceding claims 2 to 4, wherein,
for the discrepancy detection operation, the controller is further configured to select, as the comparison block, a block from the remaining blocks that presumably has the same content as the target block; and/or wherein
for the voting operation, the controller is further configured to select, as the voting blocks, an even number of blocks that presumably have the same content as the target block.

6. The cryptographic hardware accelerator of any of the preceding claims 2 to 5, wherein the controller is configured to select the comparison block and/or the even number of voting blocks using a pre-programmed redundancy-block selection sequence.

7. The cryptographic hardware accelerator of any of the preceding claims 2 to 6, wherein the controller is configured to selectively enable the discrepancy detection operation, and optionally, the voting operation, using a pre-programmed operation enabling algorithm.

8. The cryptographic hardware accelerator of any of the preceding claims 2 to 7, wherein the controller is configured to perform the block addressing operation and/or the comparison block addressing operation and/or the voting block addressing operation for a given write-to-bus operation by encoding a block's address and/or a respective comparison and/or voting block's address in a write control word that has one allocated bit position per each block and each redundancy block.

9. The cryptographic hardware accelerator of claim 8, wherein
- the controller comprises a write-to-bus selection control register for storing the write-to-bus selection control word;
- the write-to-bus selection control register is connected with the bus via a write logic circuit;
- the write logic circuit is configured to receive respective bit values from the blocks and from the write-to-bus selection control register and is configured, using the block's bit values and the received bit values of the write-to-bus selection control word,
- to address the selected block or selected blocks for a write-to-bus operation in accordance with the write-to-bus selection control word, and
- when the discrepancy detection operation and the voting operation are not enabled, to provide the content of the selected block or a coupled content obtained from the selected blocks to the bus via a pre-determined signalling path through the write logic circuit,
- when the discrepancy detection operation is enabled, to provide the content of the selected target block to the bus via the pre-determined signalling path through the write logic circuit upon determining that the discrepancy detected signal (DS) is indicative of non-differing contents of the target block and the redundancy block;
- when the voting operation is enabled, to provide the most repeated content to the bus via a pre-determined voting signalling path through the write logic circuit.

10. The cryptographic hardware accelerator of any of the preceding claims 1 to 9, wherein, for controlling the data exchange, the controller is further configured to perform, in the course of performing the computational operation,
- a dummy-addressing selection operation to select one or more of the blocks for a dummy addressing operation, and a dummy-addressing operation of the selected one or more of the blocks, for dummy-addressing the one or more of the selected blocks in the write-to-bus operation; wherein
- the controller is configured to perform the dummy-addressing operation using at least one of a set of one or more respective dummy addresses, which are pre-assigned to the selected one or more of the blocks in addition to their respective first address.

11. The cryptographic hardware accelerator of any of the preceding claims 1 to 10, wherein the controller comprises a read-from-bus selection control register for storing a read selection control word indicative of the one or more addresses of at least one block to be addressed in the read-from-bus operation to be performed.

12. A method (700) for operating a cryptographic hardware accelerator (100) for performing a computational operation in a cryptographic application, the method comprising
- providing (702) one or more addressable blocks;
- providing (704) a databus (106) for data exchange between the blocks in the form of read-from-bus operations and write-to-bus operations in the course of performing the computational operation; and
- controlling (706) a data exchange, in the course of performing the computational operation, the controlling comprising a block addressing operation, using a respective pre-assigned first address of the blocks for addressing the one or more of the blocks involved in a write-to-bus operation in the data exchange;
wherein, when the controlling comprises addressing a single target block (102.N) in the block addressing operation, the controlling further includes selectively (708) enabling a discrepancy detection operation;
wherein, for performing the discrepancy detection operation, the controlling includes performing (710) a comparison block addressing operation wherein a comparison block (102.4) among the remaining blocks (102) is selected and the target block and the comparison block selected are addressed for performing the discrepancy detection operation,
providing (712) a discrepancy detected signal (DS) indicative of whether respective contents (C) of the target block and the comparison block differ or not; and
performing (714) the write-to-bus operation upon determining that the discrepancy detected signal (DS) is indicative of non-differing contents of the target block and the comparison block.

13. The method of claim 12, wherein when the controlling includes addressing a single target block (102.N) in the block addressing operation, the controlling further includes selectively enabling (708) a voting operation;
performing (710) a voting block addressing operation wherein an even number of voting blocks (102.1, 102.4) among the remaining blocks (102) are selected, and the even number of voting blocks (102.1, 102.4) and the target block are addressed for performing the voting operation;
determining (716) a most repeated content (CV) among the respective contents of the target block and the selected voting blocks,
performing (718) the write-to-bus operation using the determined most repeated content.

14. The method of claim 12 or 13, further comprising
performing, in the course of performing the computational operation, a dummy-addressing selection operation to select one or more of the blocks for a dummy addressing operation and a dummy-addressing operation of the selected one or more of the blocks, for dummy-addressing the one or more of the selected blocks in the write-to-bus operation; and
- performing the dummy-addressing operation using at least one of a set of one or more respective dummy addresses, which are pre-assigned to the selected one or more of the blocks in addition to their respective first address.

15. A computer program comprising instructions to cause the cryptographic hardware accelerator of any of the claims 1 to 10 to execute the steps of the method of claims 12 to 14.

## Patentansprüche

1. Kryptografischer Hardwarebeschleuniger (100) zum Durchführen einer Rechenoperation in einer kryptografischen Anwendung, wobei der kryptografische Hardwarebeschleuniger umfasst
- einen oder mehrere adressierbare Blöcke (102);
- einen Datenbus (106) zum Datenaustausch zwischen den Blöcken in Form von Bus-Lese-Operationen und Bus-Schreib-Operationen im Zuge des Durchführens der Rechenoperation; und
- eine Steuerung (108) zum Steuern des Datenaustauschs, wobei die Steuerung dazu eingerichtet ist, im Zuge des Durchführens der Rechenoperation eine Blockadressierungsoperation durchzuführen, unter Verwendung einer jeweiligen vorab zugewiesenen ersten Adresse der Blöcke zum Adressieren des einen oder der mehreren der Blöcke, die an einer Bus-Schreib-Operation im Datenaustausch beteiligt sind;
wobei, wenn ein einzelner Zielblock (102.N) in der Blockadressierungsoperation adressiert wird, die Steuerung ferner dazu eingerichtet ist, selektiv eine Diskrepanzerkennungsoperation zu aktivieren;
wobei zum Durchführen der Diskrepanzerkennungsoperation die Steuerung dazu eingerichtet ist, eine Vergleichsblock-Adressierungsoperation durchzuführen, wobei ein Vergleichsblock (102.4) unter den übrigen Blöcken (102) ausgewählt wird und der Zielblock (102.N) und der ausgewählte Vergleichsblock (102.4) zum Durchführen der Diskrepanzerkennungsoperation adressiert werden;
wobei zum Durchführen der Diskrepanzerkennungsoperation der kryptografische Hardwarebeschleuniger ferner umfasst:
- eine Diskrepanzerkennungseinheit (109), die mit den Blöcken (102) verbunden und dazu eingerichtet ist, ein Diskrepanz-erkannt-Signal (DS) bereitzustellen, das anzeigt, ob sich jeweilige Inhalte (C) des Zielblocks (102.N) und des Vergleichsblocks (102.4) unterscheiden oder nicht; und wobei
wenn die Diskrepanzerkennungsoperation aktiviert ist, die Steuerung dazu eingerichtet ist, die Bus-Schreib-Operation beim Ermitteln durchzuführen, dass das Diskrepanz-erkannt-Signal (DS) sich nicht unterscheidende Inhalte des Zielblocks und des Vergleichsblocks anzeigt.

2. Kryptografischer Hardwarebeschleuniger nach Anspruch 1, wobei, wenn ein einzelner Zielblock (102.N) in der Blockadressierungsoperation adressiert wird, die Steuerung ferner dazu eingerichtet ist, selektiv eine Voting-Operation zu aktivieren;
wobei zum Durchführen der Voting-Operation die Steuerung dazu eingerichtet ist, eine Voting-Block-Adressierungsoperation durchzuführen, wobei eine gerade Anzahl von Voting-Blöcken (102.1, 102.4) unter den übrigen Blöcken (102) ausgewählt wird und die gerade Anzahl von Voting-Blöcken (102.1, 102.4) und der Zielblock (102.N) zum Durchführen der Voting-Operation adressiert werden,
wobei zum Durchführen der Voting-Operation der kryptografische Hardwarebeschleuniger ferner umfasst
- eine Voter-Einheit (111), die mit den Blöcken (102) verbunden und dazu eingerichtet ist, einen am häufigsten wiederholten Inhalt unter den jeweiligen Inhalten des Zielblocks (102.N) und der ausgewählten Voting-Blöcke (102.1, 102.4) zu ermitteln, wobei
wenn die Voting-Operation aktiviert ist, die Steuerung dazu eingerichtet ist, die Bus-Schreib-Operation unter Verwendung des von der Voter-Einheit ermittelten am häufigsten wiederholten Inhalts durchzuführen.

3. Kryptografischer Hardwarebeschleuniger nach Anspruch 2, wobei zum Durchführen der Voting-Operation die Steuerung dazu eingerichtet ist, die Voting-Block-Adressierungsoperation durchzuführen, die den Zielblock und zwei Voting-Blöcke adressiert.

4. Kryptografischer Hardwarebeschleuniger nach Anspruch 2 oder 3, wobei die Blöcke (102.1,..., 102.N) in nicht überlappende Gruppen von Blöcken (GR1, GR2 und GR3) unterteilt sind und wobei jeder von dem Zielblock und den Voting-Blöcken in einer jeweiligen der unterschiedlichen nicht überlappenden Gruppen von Blöcken enthalten ist.

5. Kryptografischer Hardwarebeschleuniger nach einem der vorhergehenden Ansprüche 2 bis 4, wobei,
für die Diskrepanzerkennungsoperation die Steuerung ferner dazu eingerichtet ist, als Vergleichsblock einen Block aus den übrigen Blöcken auszuwählen, der vermutlich denselben Inhalt wie der Zielblock aufweist; und/oder wobei
für die Voting-Operation die Steuerung ferner dazu eingerichtet ist, als Voting-Blöcke eine gerade Anzahl von Blöcken auszuwählen, die vermutlich denselben Inhalt wie der Zielblock aufweisen.

6. Kryptografischer Hardwarebeschleuniger nach einem der vorhergehenden Ansprüche 2 bis 5, wobei die Steuerung dazu eingerichtet ist, den Vergleichsblock und/oder die gerade Anzahl von Voting-Blöcken unter Verwendung einer vorprogrammierten Redundanzblock-Auswahlsequenz auszuwählen.

7. Kryptografischer Hardwarebeschleuniger nach einem der vorhergehenden Ansprüche 2 bis 6, wobei die Steuerung dazu eingerichtet ist, die Diskrepanzerkennungsoperation und, optional, die Voting-Operation unter Verwendung eines vorprogrammierten Operationsfreigabealgorithmus selektiv zu aktivieren.

8. Kryptografischer Hardwarebeschleuniger nach einem der vorhergehenden Ansprüche 2 bis 7, wobei die Steuerung dazu eingerichtet ist, die Blockadressierungsoperation und/oder die Vergleichsblock-Adressierungsoperation und/oder die Voting-Block-Adressierungsoperation für eine gegebene Bus-Schreib-Operation durchzuführen durch Codieren einer Adresse eines Blocks und/oder einer Adresse eines jeweiligen Vergleichs- und/oder Voting-Blocks in einem Schreibsteuerwort, das eine zugeordnete Bitposition pro Block und pro Redundanzblock aufweist.

9. Kryptografischer Hardwarebeschleuniger nach Anspruch 8, wobei
- die Steuerung ein Bus-Schreib-Auswahlsteuerregister zum Speichern des Bus-Schreib-Auswahlsteuerworts umfasst;
- das Bus-Schreib-Auswahlsteuerregister über eine Schreiblogikschaltung mit dem Bus verbunden ist;
- die Schreiblogikschaltung dazu eingerichtet ist, jeweilige Bitwerte von den Blöcken und von dem Bus-Schreib-Auswahlsteuerregister zu empfangen, und dazu eingerichtet ist, unter Verwendung der Bitwerte des Blocks und der empfangenen Bitwerte des Bus-Schreib-Auswahlsteuerworts,
- den ausgewählten Block oder ausgewählte Blöcke für eine Bus-Schreib-Operation gemäß dem Bus-Schreib-Auswahlsteuerwort zu adressieren, und
- wenn die Diskrepanzerkennungsoperation und die Voting-Operation nicht aktiviert sind, den Inhalt des ausgewählten Blocks oder einen aus den ausgewählten Blöcken erhaltenen gekoppelten Inhalt dem Bus über einen vorbestimmten Signalpfad durch die Schreiblogikschaltung bereitzustellen,
- wenn die Diskrepanzerkennungsoperation aktiviert ist, den Inhalt des ausgewählten Zielblocks dem Bus über den vorbestimmten Signalpfad durch die Schreiblogikschaltung bereitzustellen, beim Ermitteln, dass das Diskrepanz-erkannt-Signal (DS) sich nicht unterscheidende Inhalte des Zielblocks und des Redundanzblocks anzeigt;
- wenn die Voting-Operation aktiviert ist, den am häufigsten wiederholten Inhalt dem Bus über einen vorbestimmten Voting-Signalpfad durch die Schreiblogikschaltung bereitzustellen.

10. Kryptografischer Hardwarebeschleuniger nach einem der vorhergehenden Ansprüche 1 bis 9, wobei zum Steuern des Datenaustauschs die Steuerung ferner dazu eingerichtet ist, im Zuge des Durchführens der Rechenoperation
- eine Dummy-Adressierungs-Auswahloperation zum Auswählen eines oder mehrerer der Blöcke für eine Dummy-Adressierungsoperation, und eine Dummy-Adressierungsoperation des ausgewählten einen oder der ausgewählten mehreren der Blöcke zum Dummy-Adressieren des einen oder der mehreren der ausgewählten Blöcke in der Bus-Schreib-Operation durchzuführen; wobei
- die Steuerung dazu eingerichtet ist, die Dummy-Adressierungsoperation unter Verwendung mindestens einer aus einem Satz von einer oder mehreren jeweiligen Dummy-Adressen durchzuführen, die dem ausgewählten einen oder den ausgewählten mehreren der Blöcke zusätzlich zu ihrer jeweiligen ersten Adresse vorab zugewiesen sind.

11. Kryptografischer Hardwarebeschleuniger nach einem der vorhergehenden Ansprüche 1 bis 10, wobei die Steuerung ein Bus-Lese-Auswahlsteuerregister zum Speichern eines Bus-Lese-Auswahlsteuerworts umfasst, das die eine oder die mehreren Adressen mindestens eines Blocks anzeigt, der in der durchzuführenden Bus-Lese-Operation zu adressieren ist.

12. Verfahren (700) zum Betreiben eines kryptografischen Hardwarebeschleunigers (100) zum Durchführen einer Rechenoperation in einer kryptografischen Anwendung, wobei das Verfahren umfasst
- Bereitstellen (702) eines oder mehrerer adressierbarer Blöcke;
- Bereitstellen (704) eines Datenbusses (106) zum Datenaustausch zwischen den Blöcken in Form von Bus-Lese-Operationen und Bus-Schreib-Operationen im Zuge des Durchführens der Rechenoperation; und
- Steuern (706) eines Datenaustauschs im Zuge des Durchführens der Rechenoperation, wobei das Steuern eine Blockadressierungsoperation umfasst, unter Verwendung einer jeweiligen vorab zugewiesenen ersten Adresse der Blöcke zum Adressieren des einen oder der mehreren der Blöcke, die an einer Bus-Schreib-Operation im Datenaustausch beteiligt sind;
wobei, wenn das Steuern ein Adressieren eines einzelnen Zielblocks (102.N) in der Blockadressierungsoperation umfasst, das Steuern ferner ein selektives (708) Aktivieren einer Diskrepanzerkennungsoperation beinhaltet;
wobei zum Durchführen der Diskrepanzerkennungsoperation das Steuern ein Durchführen (710) einer Vergleichsblock-Adressierungsoperation beinhaltet, wobei ein Vergleichsblock (102.4) unter den übrigen Blöcken (102) ausgewählt wird und der Zielblock und der ausgewählte Vergleichsblock zum Durchführen der Diskrepanzerkennungsoperation adressiert werden,
Bereitstellen (712) eines Diskrepanz-erkannt-Signals (DS), das anzeigt, ob sich jeweilige Inhalte (C) des Zielblocks und des Vergleichsblocks unterscheiden oder nicht; und
Durchführen (714) der Bus-Schreib-Operation beim Ermitteln, dass das Diskrepanz-erkannt-Signal (DS) sich nicht unterscheidende Inhalte des Zielblocks und des Vergleichsblocks anzeigt.

13. Verfahren nach Anspruch 12, wobei, wenn das Steuern ein Adressieren eines einzelnen Zielblocks (102.N) in der Blockadressierungsoperation beinhaltet, das Steuern ferner ein selektives Aktivieren (708) einer Voting-Operation beinhaltet;
Durchführen (710) einer Voting-Block-Adressierungsoperation, wobei eine gerade Anzahl von Voting-Blöcken (102.1, 102.4) unter den übrigen Blöcken (102) ausgewählt wird und die gerade Anzahl von Voting-Blöcken (102.1, 102.4) und der Zielblock zum Durchführen der Voting-Operation adressiert werden;
Ermitteln (716) eines am häufigsten wiederholten Inhalts (CV) unter den jeweiligen Inhalten des Zielblocks und der ausgewählten Voting-Blöcke,
Durchführen (718) der Bus-Schreib-Operation unter Verwendung des ermittelten am häufigsten wiederholten Inhalts.

14. Verfahren nach Anspruch 12 oder 13, ferner umfassend
Durchführen, im Zuge des Durchführens der Rechenoperation, einer Dummy-Adressierungs-Auswahloperation zum Auswählen eines oder mehrerer der Blöcke für eine Dummy-Adressierungsoperation und einer Dummy-Adressierungsoperation des ausgewählten einen oder der ausgewählten mehreren der Blöcke zum Dummy-Adressieren des einen oder der mehreren der ausgewählten Blöcke in der Bus-Schreib-Operation; und
Durchführen der Dummy-Adressierungsoperation unter Verwendung mindestens einer aus einem Satz von einer oder mehreren jeweiligen Dummy-Adressen, die dem ausgewählten einen oder den ausgewählten mehreren der Blöcke zusätzlich zu ihrer jeweiligen ersten Adresse vorab zugewiesen sind.

15. Computerprogramm, umfassend Befehle zum Veranlassen des kryptografischen Hardwarebeschleunigers nach einem der Ansprüche 1 bis 10, die Schritte des Verfahrens nach den Ansprüchen 12 bis 14 auszuführen.

## Revendications

1. Accélérateur matériel cryptographique (100) pour exécuter une opération de calcul dans une application cryptographique, l'accélérateur matériel cryptographique comprenant
- un ou plusieurs blocs adressables (102) ;
- un bus de données (106) pour l'échange de données entre les blocs sous la forme d'opérations de lecture depuis le bus et d'opérations d'écriture sur le bus au cours de l'exécution de l'opération de calcul ; et
- un contrôleur (108) pour commander l'échange de données, le contrôleur étant configuré pour exécuter, au cours de l'exécution de l'opération de calcul, une opération d'adressage de bloc, en utilisant une première adresse préassignée respective des blocs pour adresser le ou les blocs impliqués dans une opération d'écriture sur le bus dans l'échange de données ;
dans lequel, lorsqu'un unique bloc cible (102.N) est adressé dans l'opération d'adressage de bloc, le contrôleur est en outre configuré pour activer de manière sélective une opération de détection de divergence ;
dans lequel, pour exécuter l'opération de détection de divergence, le contrôleur est configuré pour exécuter une opération d'adressage de bloc de comparaison dans laquelle un bloc de comparaison (102.4) parmi les blocs restants (102) est sélectionné et le bloc cible (102.N) et le bloc de comparaison (102.4) sélectionné sont adressés pour exécuter l'opération de détection de divergence ;
dans lequel, pour exécuter l'opération de détection de divergence, l'accélérateur matériel cryptographique comprend en outre :
- une unité de détection de divergence (109) connectée aux blocs (102) et configurée pour fournir un signal de divergence détectée (DS) indiquant si des contenus (C) respectifs du bloc cible (102.N) et du bloc de comparaison (102.4) diffèrent ou non ; et dans lequel lorsque l'opération de détection de divergence est activée, le contrôleur est configuré pour exécuter l'opération d'écriture sur le bus lors de la détermination que le signal de divergence détectée (DS) indique des contenus du bloc cible et du bloc de comparaison qui ne diffèrent pas.

2. Accélérateur matériel cryptographique selon la revendication 1, dans lequel, lorsqu'un unique bloc cible (102.N) est adressé dans l'opération d'adressage de bloc, le contrôleur est en outre configuré pour activer de manière sélective une opération de vote ;
dans lequel, pour exécuter l'opération de vote, le contrôleur est configuré pour exécuter une opération d'adressage de bloc de vote dans laquelle un nombre pair de blocs de vote (102.1, 102.4) parmi les blocs restants (102) sont sélectionnés, et le nombre pair de blocs de vote (102.1, 102.4) et le bloc cible (102.N) sont adressés pour exécuter l'opération de vote,
dans lequel, pour exécuter l'opération de vote, l'accélérateur matériel cryptographique comprend en outre
- une unité de vote (111) connectée aux blocs (102) et configurée pour déterminer un contenu le plus répété parmi les contenus respectifs du bloc cible (102.N) et des blocs de vote sélectionnés (102.1, 102.4), dans lequel
lorsque l'opération de vote est activée, le contrôleur est configuré pour exécuter l'opération d'écriture sur le bus en utilisant le contenu le plus répété déterminé par l'unité de vote.

3. Accélérateur matériel cryptographique selon la revendication 2, dans lequel, pour exécuter l'opération de vote, le contrôleur est configuré pour exécuter l'opération d'adressage de bloc de vote adressant le bloc cible et deux blocs de vote.

4. Accélérateur matériel cryptographique selon la revendication 2 ou 3, dans lequel les blocs (102.1,..., 102.N) sont divisés en groupes de blocs sans chevauchement (GR1, GR2 et GR3) et dans lequel chacun du bloc cible et des blocs de vote est inclus dans l'un respectif des différents groupes de blocs sans chevauchement.

5. Accélérateur matériel cryptographique selon l'une quelconque des revendications précédentes 2 à 4, dans lequel,
pour l'opération de détection de divergence, le contrôleur est en outre configuré pour sélectionner, en tant que bloc de comparaison, un bloc parmi les blocs restants qui a présumément le même contenu que le bloc cible ; et/ou dans lequel
pour l'opération de vote, le contrôleur est en outre configuré pour sélectionner, en tant que blocs de vote, un nombre pair de blocs qui ont présumément le même contenu que le bloc cible.

6. Accélérateur matériel cryptographique selon l'une quelconque des revendications précédentes 2 à 5, dans lequel le contrôleur est configuré pour sélectionner le bloc de comparaison et/ou le nombre pair de blocs de vote en utilisant une séquence de sélection de blocs de redondance préprogrammée.

7. Accélérateur matériel cryptographique selon l'une quelconque des revendications précédentes 2 à 6, dans lequel le contrôleur est configuré pour activer de manière sélective l'opération de détection de divergence, et éventuellement l'opération de vote, en utilisant un algorithme d'activation d'opération préprogrammé.

8. Accélérateur matériel cryptographique selon l'une quelconque des revendications précédentes 2 à 7, dans lequel le contrôleur est configuré pour exécuter l'opération d'adressage de bloc et/ou l'opération d'adressage de bloc de comparaison et/ou l'opération d'adressage de bloc de vote pour une opération d'écriture sur le bus donnée en codant une adresse d'un bloc et/ou une adresse d'un bloc de comparaison et/ou de vote respectif dans un mot de commande d'écriture qui présente une position de bit allouée par bloc et par bloc de redondance.

9. Accélérateur matériel cryptographique selon la revendication 8, dans lequel
- le contrôleur comprend un registre de commande de sélection d'écriture sur le bus pour stocker le mot de commande de sélection d'écriture sur le bus ;
- le registre de commande de sélection d'écriture sur le bus est connecté au bus par l'intermédiaire d'un circuit logique d'écriture ;
- le circuit logique d'écriture est configuré pour recevoir des valeurs de bit respectives des blocs et du registre de commande de sélection d'écriture sur le bus et est configuré, en utilisant les valeurs de bit du bloc et les valeurs de bit reçues du mot de commande de sélection d'écriture sur le bus,
- pour adresser le bloc sélectionné ou les blocs sélectionnés pour une opération d'écriture sur le bus conformément au mot de commande de sélection d'écriture sur le bus, et
- lorsque l'opération de détection de divergence et l'opération de vote ne sont pas activées, pour fournir au bus le contenu du bloc sélectionné ou un contenu couplé obtenu à partir des blocs sélectionnés par l'intermédiaire d'un chemin de signalisation prédéterminé à travers le circuit logique d'écriture,
- lorsque l'opération de détection de divergence est activée, pour fournir au bus le contenu du bloc cible sélectionné par l'intermédiaire du chemin de signalisation prédéterminé à travers le circuit logique d'écriture lors de la détermination que le signal de divergence détectée (DS) indique des contenus du bloc cible et du bloc de redondance qui ne diffèrent pas ;
- lorsque l'opération de vote est activée, pour fournir au bus le contenu le plus répété par l'intermédiaire d'un chemin de signalisation de vote prédéterminé à travers le circuit logique d'écriture.

10. Accélérateur matériel cryptographique selon l'une quelconque des revendications précédentes 1 à 9, dans lequel, pour commander l'échange de données, le contrôleur est en outre configuré pour exécuter, au cours de l'exécution de l'opération de calcul,
- une opération de sélection d'adressage factice pour sélectionner un ou plusieurs des blocs pour une opération d'adressage factice, et une opération d'adressage factice du ou des blocs sélectionnés, pour l'adressage factice du ou des blocs parmi les blocs sélectionnés dans l'opération d'écriture sur le bus ; dans lequel
- le contrôleur est configuré pour exécuter l'opération d'adressage factice en utilisant au moins une adresse parmi un ensemble d'une ou plusieurs adresses factices respectives, qui sont préassignées au ou aux blocs sélectionnés en plus de leur première adresse respective.

11. Accélérateur matériel cryptographique selon l'une quelconque des revendications précédentes 1 à 10, dans lequel le contrôleur comprend un registre de commande de sélection de lecture depuis le bus pour stocker un mot de commande de sélection de lecture indiquant la ou les adresses d'au moins un bloc à adresser dans l'opération de lecture depuis le bus à exécuter.

12. Procédé (700) pour faire fonctionner un accélérateur matériel cryptographique (100) pour exécuter une opération de calcul dans une application cryptographique, le procédé comprenant
- la fourniture (702) d'un ou de plusieurs blocs adressables ;
- la fourniture (704) d'un bus de données (106) pour l'échange de données entre les blocs sous la forme d'opérations de lecture depuis le bus et d'opérations d'écriture sur le bus au cours de l'exécution de l'opération de calcul ; et
- la commande (706) d'un échange de données, au cours de l'exécution de l'opération de calcul, la commande comprenant une opération d'adressage de bloc, en utilisant une première adresse préassignée respective des blocs pour adresser le ou les blocs impliqués dans une opération d'écriture sur le bus dans l'échange de données ;
dans lequel, lorsque la commande comprend l'adressage d'un unique bloc cible (102.N) dans l'opération d'adressage de bloc, la commande inclut en outre l'activation (708) de manière sélective d'une opération de détection de divergence ;
dans lequel, pour exécuter l'opération de détection de divergence, la commande inclut l'exécution (710) d'une opération d'adressage de bloc de comparaison dans laquelle un bloc de comparaison (102.4) parmi les blocs restants (102) est sélectionné et le bloc cible et le bloc de comparaison sélectionné sont adressés pour exécuter l'opération de détection de divergence,
la fourniture (712) d'un signal de divergence détectée (DS) indiquant si des contenus (C) respectifs du bloc cible et du bloc de comparaison diffèrent ou non ; et
l'exécution (714) de l'opération d'écriture sur le bus lors de la détermination que le signal de divergence détectée (DS) indique des contenus du bloc cible et du bloc de comparaison qui ne diffèrent pas.

13. Procédé selon la revendication 12, dans lequel, lorsque la commande inclut l'adressage d'un unique bloc cible (102.N) dans l'opération d'adressage de bloc, la commande inclut en outre l'activation (708) de manière sélective d'une opération de vote ;
l'exécution (710) d'une opération d'adressage de bloc de vote dans laquelle un nombre pair de blocs de vote (102.1, 102.4) parmi les blocs restants (102) sont sélectionnés, et le nombre pair de blocs de vote (102.1, 102.4) et le bloc cible sont adressés pour exécuter l'opération de vote ;
la détermination (716) d'un contenu le plus répété (CV) parmi les contenus respectifs du bloc cible et des blocs de vote sélectionnés,
l'exécution (718) de l'opération d'écriture sur le bus en utilisant le contenu le plus répété déterminé.

14. Procédé selon la revendication 12 ou 13, comprenant en outre
l'exécution, au cours de l'exécution de l'opération de calcul, d'une opération de sélection d'adressage factice pour sélectionner un ou plusieurs des blocs pour une opération d'adressage factice et d'une opération d'adressage factice du ou des blocs sélectionnés, pour l'adressage factice du ou des blocs parmi les blocs sélectionnés dans l'opération d'écriture sur le bus ; et
l'exécution de l'opération d'adressage factice en utilisant au moins une adresse parmi un ensemble d'une ou plusieurs adresses factices respectives, qui sont préassignées au ou aux blocs sélectionnés en plus de leur première adresse respective.

15. Programme d'ordinateur comprenant des instructions pour amener l'accélérateur matériel cryptographique selon l'une quelconque des revendications 1 à 10 à exécuter les étapes du procédé selon les revendications 12 à 14.
